# EUROPEAN PATENT SPECIFICATION

(11) **EP 3 093 581 B1**
(45) Date of publication and mention of the grant of the patent: **05.05.2021**
(21) Application number: 16153030.8
(22) Date of filing: 27.01.2016
(51) Int. Cl.: F24S 23/74, F24S 50/20, F24S 10/40, F24S 50/00, F24D 19/10

(54) **SOLAR HEAT COLLECTING SYSTEM**
SONNENWÄRMESAMMELSYSTEM
SYSTÈME DE COLLECTE DE CHALEUR SOLAIRE

(30) Priority: 19.03.2015 JP 2015056449
(43) Date of publication of application: 16.11.2016
(73) Proprietor: Kabushiki Kaisha Toshiba, Tokyo 105-8001 (JP)
(72) Inventor: GOTO, Koichi, Minato-ku, Tokyo 105-8001 (JP); TAKAHATA, Kazuo, Minato-ku, Tokyo 105-8001 (JP); KOSUGA, Takahiro, Minato-ku, Tokyo 105-8001 (JP)
(74) Representative: Moreland, David

(56) References cited:
- EP-A1- 1 176 373
- WO-A1-2013/047019
- WO-A2-2011/114235
- GB-A- 2 161 917
- JP-A- 2002 106 976
- JP-A- 2010 223 489
- JP-A- 2012 002 442
- US-A1- 2012 204 587

## Description

### FIELD

Embodiments described herein relate to a solar heat collecting system.

### BACKGROUND

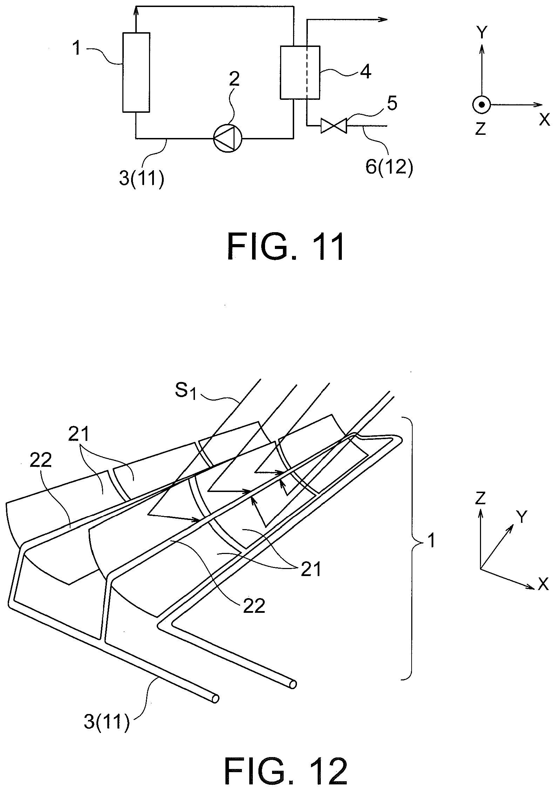

FIG. 11 is a schematic diagram showing a first example of a configuration of a conventional solar heat collecting system.

The solar heat collecting system in FIG. 11 includes a heat collector 1, a pump 2, a heat medium flow path 3, a heater 4, an on-off valve 5 and a heat utilizing fluid flow path 6, and collects solar heat from sunrays. Arrows X and Y indicate horizontal directions that are perpendicular to each other. An arrow Z indicates a vertical direction.

A heat medium 11 in the heat medium flow path 3 is transferred by the pump 2 to flow into the heat collector 1. The heat medium 11 is heated by sunrays in the heat collector 1. The heated heat medium 11 flows out from the heat collector 1 and flows into the heater 4 to heat a heat utilizing fluid 12 in the heater 4 by heat exchange.

The heat utilizing fluid 12 flowing out from the heater 4 flows into a heat utilizing destination (not illustrated) through the heat utilizing fluid flow path 6. An example of the heat utilizing destination is a heat utilizing facility. For example, when the heat utilizing destination is a hot water supply facility, water as the heat utilizing fluid 12 is heated in the heater 4 and supplied as hot water. Another example of the heat utilizing destination is a power generation facility. For example, when the heat utilizing destination is a turbine power generation facility of a Rankine cycle, a turbine operating medium as the heat utilizing fluid 12 is heated in the heater 4. Another example of the heat utilizing destination is a water treatment facility. For example, when the heat utilizing destination is a seawater desalination facility, seawater as the heat utilizing fluid 12 is heated in the heater 4.

Heat of the heat utilizing fluid 12 is utilized by the heat utilizing destination, so that the temperature of the heat utilizing fluid 12 decreases and the heat utilizing fluid 12 then flows out from the heat utilizing destination. In this way, the heat utilizing fluid 12 circulates between the heater 4 and the heat utilizing destination via the heat utilizing fluid flow path 6. The heat utilizing fluid flow path 6 is provided with the on-off valve 5. On the other hand, heat of the heat medium 11 is utilized by the heater 4, so that the temperature of the heat medium 11 decreases and the heat medium 11 then flows out from the heater 4. In this way, the heat medium 11 circulates between the heat collector 1 and the heater 4 via the heat medium flow path 3.

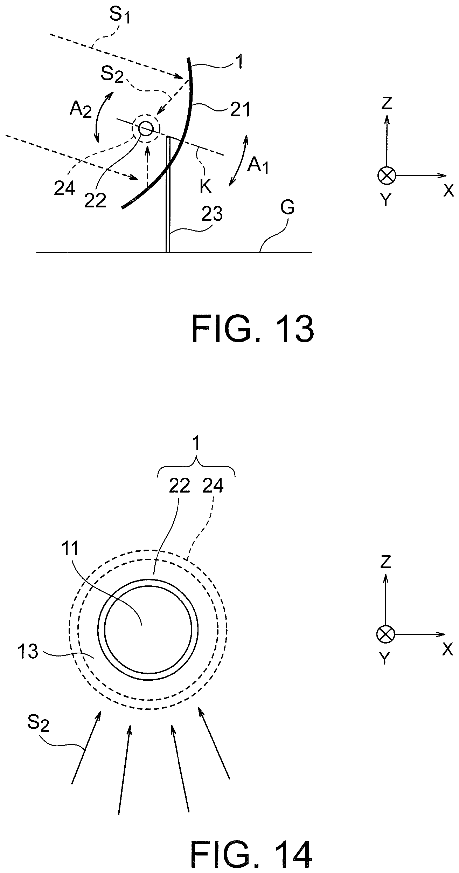

FIGS. 12 and 13 are a perspective view and a sectional view showing a structure of the conventional heat collector 1.

Types of the heat collector 1 include a concentration type and a non- concentration type. Examples of the concentration -type heat collector 1 include a trough type, a Fresnel type and a tower type. FIGS. 12 and 13 illustrate an example of the trough-type heat collector 1.

As illustrated in FIG. 13, the heat collector 1 includes a reflecting mirror 21, a heat collecting pipe 22, a support 23 and a glass pipe 24, and is provided on the ground G.

The reflecting mirror 21 has a curved shape that is long in a horizontal direction. A section perpendicular to the longitudinal direction of the reflecting mirror 21 is a parabola. The heat collector 1 rotates and drives the reflecting mirror 21 so as to make an axis K (a straight line connecting a focal point and an apex) of the parabola parallel to the sunrays S₁. That is, the reflecting mirror 21 tracks the sun according to the altitude of the sun. Reference character S₂ denotes a reflected light of sunray S₁ reflected by the reflecting mirror 21.

The heat collecting pipe 22 is arranged at the focal point of the parabola. The heat collector 1 may adjust the rotation center of the reflecting mirror 21 to the focal point of the parabola or may adjust the rotation center of the reflecting mirror 21 to a point different from the focal point. In FIG. 13, the rotation center is the end of the support 23 and the reflecting mirror 21 rotates in a direction of an arrow A₁. The reflecting mirror 21 has a structure connected and integrated with the heat collecting pipe 22. The heat collecting pipe 22 rotates in a direction of an arrow A₂ in response to the rotation of the reflecting mirror 21 in the arrow A₁. The rotation center of the heat collecting pipe 22 is same as that of the reflecting mirror 21. Accordingly, from a viewpoint of a phase in the peripheral direction of the heat collecting pipe 22, rotation of the reflecting mirror 21 has no influence in a surface area of the heat collecting pipe 22 that is nearest to the reflecting mirror 21.

FIG. 14 is an enlarged sectional view showing the structure of the conventional heat collector 1.

The heat collecting pipe 22 is a pipe arranged in parallel with the horizontal axes of the reflecting mirrors 21. The sunrays S₁ are reflected by the reflecting mirrors 21 to become the reflected lights S₂ and the reflected lights S₂ are concentrated to the heat collecting pipe 22. The heat medium 11 flows through the heat collecting pipe 22. The heat medium 11 flows in from one end of the heat collecting pipe 22 and flows out from the other end of the heat collecting pipe 22.

Only a portion of the heat collecting pipe 22 where the reflected lights S₂ are concentrated is in the transparent glass pipe 24. The heat collecting pipe 22 is a metal pipe, for example. A space between the heat collecting pipe 22 and the glass pipe 24 is preferably a vacuum 13. However, air may exist between the heat collecting pipe 22 and the glass pipe 24 depending on a sealing structure between the heat collecting pipe 22 and the glass pipe 24. The heat medium 11, which is oil, for example, is heated by the concentrated reflected lights S₂.

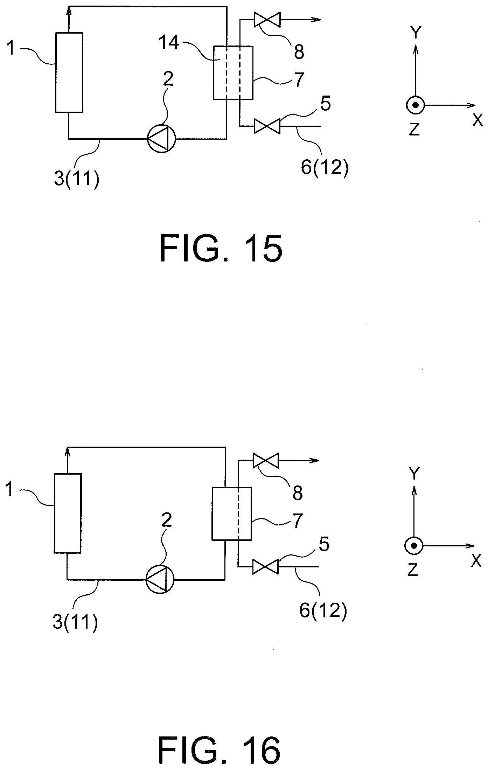

FIG. 15 is a schematic diagram showing a second example of the configuration of the conventional solar heat collecting system. In the descriptions on FIG. 15, descriptions on the components same as those in the first example are omitted.

The solar heat collecting system in FIG. 15 includes a heat storage tank 7 instead of the heater 4. The solar heat collecting system in FIG. 15 further includes an on-off valve 8 that is provided with the heat utilizing fluid flow path 6 in the vicinity of the exit of the heat storage tank 7 in addition to the on-off valve 5 that is provided with the heat utilizing fluid flow path 6 in the vicinity of the entrance of the heat storage tank 7.

During a heat storage operation, the heat medium 11 in the heat medium flow path 3 is transferred by the pump 2 to flow into the heat collector 1. The heat medium 11 is heated by sunrays in the heat collector 1. The heated heat medium 11 flows out from the heat collector 1 into the heat storage tank 7 and heats a heat storable substance 14 in the heat storage tank 7 by heat exchange. At that time, the on-off valves 5 and 8 are closed and the heat utilizing fluid 12 does not circulate.

During a heat utilizing operation, the on-off valves 5 and 8 are opened. As a result, the heat utilizing fluid 12 in the heat utilizing fluid flow path 6 flows into the heat storage tank 7 and is heated by heat exchange with the heat storable substance 14. In this way, heat of the heat medium 11 in the present system is given to the heat utilizing fluid 12 via the heat storable substance 14. The heat utilizing fluid 12 flowing out from the heat storage tank 7 flows into a heat utilizing destination (not illustrated). Heat of the heat utilizing fluid 12 is utilized by the heat utilizing destination, the temperature of the heat utilizing fluid 12 decreases, and the heat utilizing fluid 12 flows out from the heat utilizing destination. At that time, the pump 2 stops and the heat medium 11 does not circulate.

FIG. 16 is a schematic diagram showing a third example of the configuration of the conventional solar heat collecting system. In the descriptions on FIG. 16, descriptions on the components same as those in the first and second examples are omitted.

Similarly to the solar heat collecting system in FIG. 15, the solar heat collecting system in FIG. 16 includes the heat storage tank 7 and the on-off valve 8. However, the heat storage tank 7 in FIG. 16 includes no heat storable substance 14.

During a heat storage operation, the heat medium 11 in the heat medium flow path 3 is transferred by the pump 2 to flow into the heat collector 1. The heat medium 11 is heated by sunrays in the heat collector 1. The heated heat medium 11 flows out from the heat collector 1 into the heat storage tank 7 and increases the temperature in the heat storage tank 7. At that time, the on-off valves 5 and 8 are closed and the heat utilizing fluid 12 does not circulate.

During a heat utilizing operation, the on-off valves 5 and 8 are opened. As a result, the heat utilizing fluid 12 in the heat utilizing fluid flow path 6 flows into the heat storage tank 7 and is heated by heat exchange with the heat medium 11 in the heat storage tank 7. The heat utilizing fluid 12 flowing out from the heat storage tank 7 flows into a heat utilizing destination (not illustrated). Heat of the heat utilizing fluid 12 is utilized by the heat utilizing destination, the temperature of the heat utilizing fluid 12 decreases, and the heat utilizing fluid 12 flows out from the heat utilizing destination. At that time, the pump 2 stops and the heat medium 11 does not circulate.

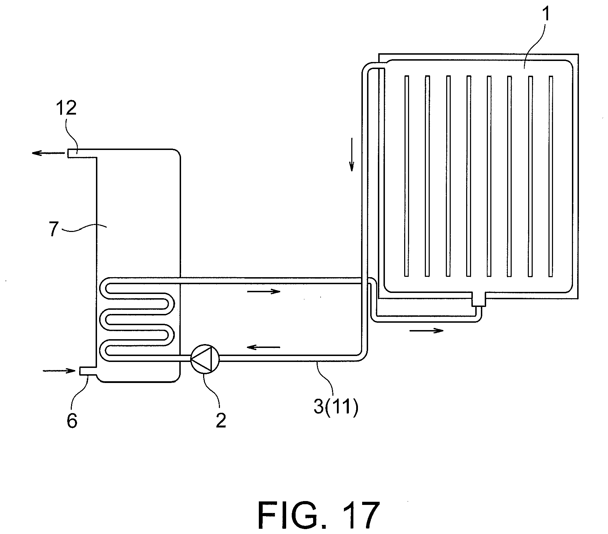

FIG. 17 is a schematic diagram illustrating a fourth example of the configuration of the conventional solar heat collecting system. In the descriptions on FIG. 17, descriptions on the components same as those in the first to third examples are omitted.

The heat collector 1 in FIG. 17 is a non- concentration type and does not track the sun. The solar heat collecting system in FIG. 17 is a hot water supply system with the heat collector 1 installed on a rooftop of a house.

During a heat storage operation, the heat medium 11 in the heat medium flow path 3 is transferred by the pump 2 to flow into the heat collector 1. The heat medium 11 is antifreeze, for example. The heat medium 11 is heated by sunrays in the heat collector 1. The heated heat medium 11 flows out from the heat collector 1 into the heat storage tank 7 and heats the heat utilizing fluid 12 in the heat storage tank 7 by heat exchange. At that time, the on-off valves 5 and 8 (not illustrated) are closed and the heat utilizing fluid 12 does not circulate. The heat utilizing fluid 12 is water, for example.

During a heat utilizing operation, the on-off valves 5 and 8 are opened. As a result, the heat utilizing fluid 12 in the heat storage tank 7 flows out from the heat storage tank 7 into a heat utilizing destination (not illustrated). Heat of the heat utilizing fluid 12 is utilized by the heat utilizing destination, the temperature of the heat utilizing fluid 12 decreases, and the heat utilizing fluid 12 flows out from the heat utilizing destination. At that time, the pump 2 stops and the heat medium 11 does not circulate.

JP 2012 002442 A discloses a solar heat hot water serving system including a solar heat collector 1, a hot water tank 2, a heat medium circulation path 7a, 7b, 7c and a controller 10, and configured to detect a temperature difference between a heat medium temperature and a water temperature. WO 2011/114235 A2 also discloses a hot water system with solar field.

JP 2010 223489 A discloses a solar system including a heat collecting panel 10, a storage tank 20 and a heat consuming part 30. JP 2002 106976 A discloses a solar hot-water supplier including temperature sensors 5, 6. GB 2161917 A discloses a solar water heater system which can detect a temperature difference between a heat medium temperature and a water temperature US 2012/204587 A1, EP 1176373 A1 and WO 2013/047019 A1 also disclose solar systems with a heat collecting panel.

### BRIEF DESCRIPTION OF THE DRAWINGS

FIG. 1 is a schematic view showing a configuration of a solar heat collecting system of a first embodiment;
FIG. 2A and 2B are graphs showing an example of an amount of direct solar radiation and an amount of acquired heat in the solar heat collecting system of the first embodiment;
FIG. 3 is a schematic view showing a configuration of a solar heat collecting system of a second embodiment;
FIG. 4 is a schematic view showing a configuration of a solar heat collecting system of a third embodiment;
FIGS. 5A and 5B are graphs showing an example of the amount of direct solar radiation and the amount of acquired heat in a solar heat collecting system of a fourth embodiment;
FIG. 6 is a schematic view showing a configuration of a solar heat collecting system of a sixth embodiment;
FIG. 7 is a schematic view showing a configuration of a solar heat collecting system of a ninth embodiment;
FIG. 8 is a sectional view for explaining the operation of a heat collector of a thirteenth embodiment;
FIG. 9 is a sectional view for explaining the operation of a heat collector of a fourteenth embodiment;
FIG. 10 is a sectional view for explaining the operation of a heat collector of a fifth embodiment;
FIG. 11 is a schematic diagram showing a first example of a configuration of a conventional solar heat collecting system;
FIG. 12 is a perspective view showing a structure of a conventional heat collector;
FIG. 13 is a sectional view showing the structure of the conventional heat collector;
FIG. 14 is an enlarged sectional view showing the structure of the conventional heat collector;
FIG. 15 is a schematic diagram showing a second example of the configuration of the conventional solar heat collecting system;
FIG. 16 is a schematic diagram showing a third example of the configuration of the conventional solar heat collecting system;
FIG. 17 is a schematic diagram showing a fourth example of the configuration of the conventional solar heat collecting system;
FIGS. 18A and 18B are graphs showing a first example of the amount of direct solar radiation and an amount of collected heat in the conventional solar heat collecting system;
FIGS. 19A and 19B are graphs showing a second example of the amount of direct solar radiation and the amount of collected heat in the conventional solar heat collecting system; and
FIGS. 20A and 20B are graphs showing a third example of the amount of direct solar radiation and the amount of collected heat in the conventional solar heat collecting system.

### DETAILED DESCRIPTION

Embodiments will now be explained with reference to the accompanying drawings.

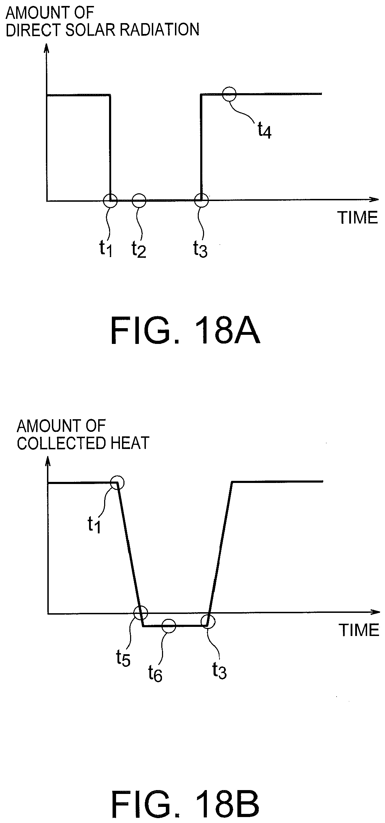

FIGS. 18A and 18B are graphs showing a first example of an amount of direct solar radiation and an amount of collected heat in the conventional solar heat collecting system.

FIG. 18A shows an example of change in the amount of direct solar radiation with time in the vicinity of the heat collector 1. The amount of direct solar radiation is an amount of heat received per unit time and per unit area by a plane whose normal line is parallel to an incident direction of sunrays.

FIG. 18B shows change in the amount of collected heat by the heat collector 1 with time with respect to the amount of direct solar radiation in FIG. 18A. The amount of collected heat in FIG. 18B shows the amount of collected heat that the heat medium 11 in the vicinity of the exit of the heat collector 1 has collected from the entrance to the exit of the heat collector 1 from sunrays. During the time indicated by the abscissa in FIG. 18B, change in incident angles of sunrays to the heat collector 1 can be ignored.

In FIG. 18A, the sun is behind a cloud from time t₁ to time t₃, and the sun appears from a cloud before time t₁ and after time t₃. Time t₂ is a time between time t₁ to time t₃. Time t₄ is a time after time t₃. When the sun disappears behind a cloud at time t₁, the amount of direct solar radiation drops suddenly to reach zero. When the sun appears from a cloud at time t₃, the amount of direct solar radiation rises suddenly to return to the value before the time t₁.

In FIG. 18B, when the amount of direct solar radiation becomes zero at time t₁, the amount of collected heat gently decreases to be a negative value from time t₁. The reason why the amount of collected heat gently decreases is that the heat medium 11 flowing out from the heat collector 1 is heated by sunrays before time t₁. Time t₅ represents a time when the amount of collected heat reaches zero. Time t₆ represents an example of a time when the amount of collected heat is a negative value. When the amount of direct solar radiation becomes a value other than zero at time t₃, the amount of collected heat gently increases from time t₃ to return to the value before time t₁. The reason why the amount of collected heat gently increases is that the heat medium 11 flowing out from the heat collector 1 is not heated by sunrays before time t₃.

The amount of collected heat by the heat collector 1 is a value obtained by subtracting an amount of radiation from the heat collector 1 to the air from an amount of received heat from sunrays. In a time period when the amount of collected heat is a negative value, the amount of direct solar radiation and the amount of received heat are zero but the amount of radiation is not zero. As a result, the amount of collected heat in this time is negative.

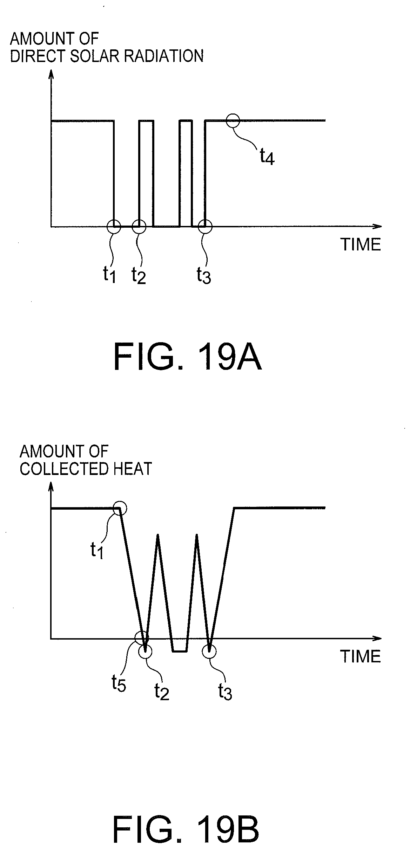

FIGS. 19A and 19B are graphs showing a second example of the amount of direct solar radiation and the amount of collected heat in the conventional solar heat collecting system. FIG. 19A shows an example of change in the amount of direct solar radiation with time in the vicinity of the heat collector 1. FIG. 19B shows change in the amount of collected heat by the heat collector 1 with time with respect to the amount of direct solar radiation in FIG. 19A.

In FIG. 19A, the sun repeatedly appears from a cloud and disappears behind a cloud from time t₁ to time t₃. For example, the sun is behind a cloud from time t₁ to time t₂ and appears from the cloud again at time t₂. Accordingly, a time period in which the amount of direct solar radiation remains zero is shorter than that in FIG. 18A. Since the amount of direct solar radiation gently decreases, an integrated amount of collected heat is a positive value from time t₁ to time t₂. This is repeated multiple times between time t₁ and time t₂. Consequently, the integrated amount of collected heat from time t₁ to time t₃ is a positive value.

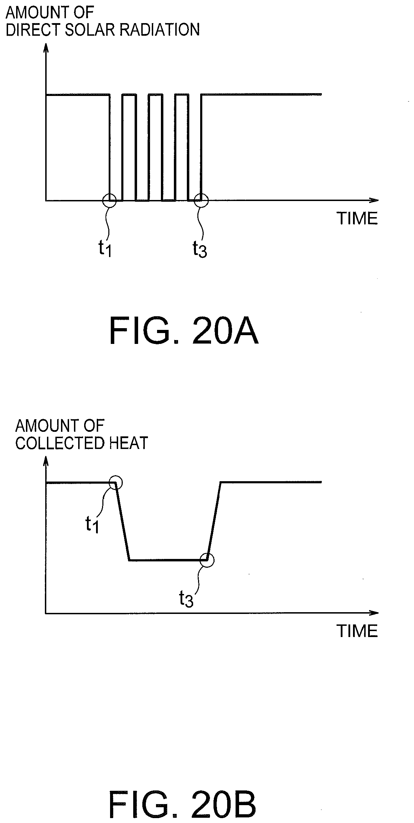

FIGS. 20A and 20B are graphs showing a third example of the amount of direct solar radiation and the amount of collected heat in the conventional solar heat collecting system. FIG. 20A shows an example of change in the amount of direct solar radiation with time in the vicinity of the heat collector 1. FIG. 20B shows change in the amount of collected heat by the heat collector 1 with time with respect to the amount of direct solar radiation in FIG. 20A.

In FIG. 20A, the sun repeatedly appears from a cloud and disappears behind a cloud from time t₁ to time t₃. The repetition frequency of the appearance and disappearance is higher than that in FIG. 19A. A time period in which the amount of direct solar radiation remains zero is shorter than those in FIGS. 18A and 19A. As a result, from time t₁ to time t₃, the amount of collected heat is smaller than that before time t₁ but does not reach a negative value.

On the basis of the descriptions of FIGS. 18A and 18B to 20A and 20B, an amount of direct solar radiation and an amount of collected heat in a conventional solar heat collecting system will be described.

In a time period in which the amount of collected heat by the heat collector 1 is a negative value, the amount of radiation is larger than the amount of received heat. As such a time period is longer, an integrated amount of collected heat by the heat collector 1 from sunrise to sunset decreases. Further, power consumed by the pump 2 in this time period is wasted. Accordingly, as this time period in the solar heat collecting system is longer, an amount of acquired energy, which is obtained by subtracting an energy consumption amount from an energy amount acquired from sunrays, considerably decreases.

When the solar heat collecting system includes the heat storage tank 7 as in FIGS. 15 to 17, variation in the amount of collected heat is large in a view point of a time or a variation width but variation in the amount of heat to heat the heat utilizing fluid 12 in the storage tank 7 is small and is generally kept not to reach a negative value. However, in a time period in which the amount of collected heat is a negative value, no heat is supplied to the heat storage tank 7, and further, heat is radiated from the surface of the heat collector 1 to the air. Accordingly, as such a time period is longer, the amount of stored heat in the heat storage tank 7 from sunrise to sunset decreases. Further, power consumed by the pump 2 in this period is wasted. As such a time period in the solar heat collecting system is longer, the amount of acquired energy in the solar heat collecting system considerably decreases.

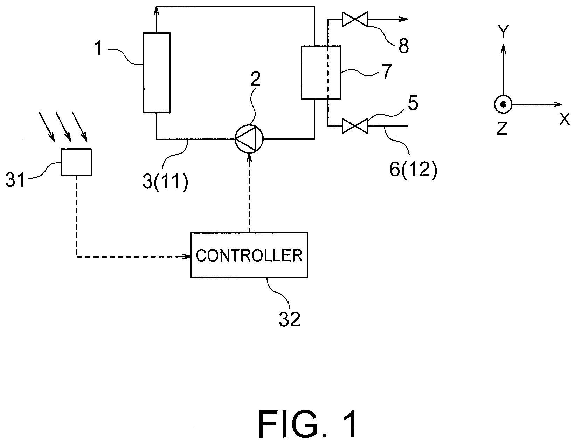

In FIGS. 1 to 10, components same as or similar to those in FIGS. 11 to 20 are denoted by same reference characters as those in FIGS. 11 to 20, and descriptions overlapping with those in FIGS. 11 to 20 are omitted.

In one embodiment, a solar heat collecting system includes a heat collector configured to heat a heat medium by a sunray, a heating device configured to heat a heat utilizing fluid by heat of the heat medium, and a heat medium flow path configured to circulate the heat medium between the heat collector and the heating device. The system further includes a controller configured to control circulation of the heat medium in the heat collector in accordance with an amount of solar radiation of the sunray, or in accordance with a temperature difference between a first temperature of the heat medium at a first position and a second temperature of the heat medium at a second position located downstream of the first position with respect to the heat medium.

### (First Embodiment)

FIG. 1 is a schematic view showing a configuration of a solar heat collecting system of a first embodiment.

Similarly to the system in FIG. 16, the solar heat collecting system in FIG. 1 includes the heat collector 1, the pump 2, the heat medium flow path 3, the on-off valve 5, the heat utilizing fluid flow path 6, the heat storage tank 7 and the on-off valve 8. The storage tank 7 in the present embodiment corresponds to the storage tank 7 in FIG. 16. However, the storage tank 7 in the present embodiment may be replaced with the heater 4 in FIG. 11, the heat storage tank 7 in FIG. 15, or the heat storage tank 7 in FIG. 17. Each of the heater 4 and the heat storage tanks 7 is an example of a heating device. The heat collector 1 in the present embodiment may be a concentration type or may be a non- concentration type. The heat collector 1 in the present embodiment is a trough type, for example. The solar heat collecting system in FIG. 1 further includes a direct solar radiation meter 31 and a controller 32.

The direct solar radiation meter 31 is arranged at a position at which the amount of direct solar radiation from sunrays can be measured, for example, at a position in the vicinity of the heat collector 1. The direct solar radiation meter 31 measures the amount of direct solar radiation from sunrays and transmits the measurement result of the amount of direct solar radiation to the controller 32.

The controller 32 controls circulation of the heat medium 11 in the heat collector 1 in accordance with the amount of direct solar radiation received from the direct solar radiation meter 31. For example, the controller 32 controls stop of the circulation of the heat medium 11, restart of the circulation of the heat medium 11, adjustment of the flow rate of the heat medium 11 and the like. The controller 32 in the present embodiment can control the circulation of the heat medium 11 by controlling the on/off and operation speed of the pump 2. The controller 32 may further control operations of the heat collector 1, the heat storage tank 7, the on-off valves 5 and 8 and the like.

Hereinafter, operations of the controller 32 in the present embodiment will be described.

The controller 32 continuously monitors an amount of direct solar radiation using the direct solar radiation meter 31 and periodically compares the amount of direct solar radiation with a predetermined value that is determined in advance. The predetermined value is stored in a memory or storage of the controller 32, for example. The predetermined value is 0 W/m² or a value close to 0 W/m², for example.

In the case where the pump 2 operates and the heat medium 11 circulates in the heat collector 1, when the amount of direct solar heat is larger than the predetermined value, the controller 32 continues the operation of the pump 2. Thereby, circulation of the heat medium 11 in the heat collector 1 continues. On the other hand, in the case where the pump 2 operates and the heat medium 11 circulates in the heat collector 1, when the amount of direct solar heat becomes smaller than the predetermined value, the controller 32 stops the pump 2. Thereby, circulation of the heat medium 11 in the heat collector 1 stops.

When the amount of direct solar radiation is equal to the predetermined value, the controller 32 may continue circulation of the heat medium 11 or may stop circulation of the heat medium 11. However, in the case where the predetermined value is set to 0 W/m², when the amount of direct solar radiation is equal to the predetermined value, circulation of the heat medium 11 stops. In this case, circulation of the heat medium 11 is continued when the amount of direct solar radiation is not 0 W/m², circulation of the heat medium 11 stops when the amount of direct solar radiation is 0 W/m².

In this way, when the amount of direct solar radiation is smaller than the predetermined value, the controller 32 stops the pump 2 to stop circulation of the heat medium 11 in the heat collector 1. Subsequently, the controller 32 continues to monitor the amount of direct solar radiation.

In the case where the pump 2 stops and circulation of the heat medium 11 stops, when the amount of direct solar radiation is smaller than the predetermined value, the controller 32 keeps the pump 2 stopped. Thereby, stop of circulation of the heat medium 11 continues. On the other hand, in the case where the pump 2 stops and circulation of the heat medium 11 is stopped, when the amount of direct solar radiation becomes larger than the predetermined value, the controller 32 restarts the operation of the pump 2. Thereby, circulation of the heat medium 11 in the heat collector 1 restarts.

In the present embodiment, the predetermined value for restarting the operation of the pump 2 is same as the predetermined value for stopping the pump 2. However, these values may differ from each other.

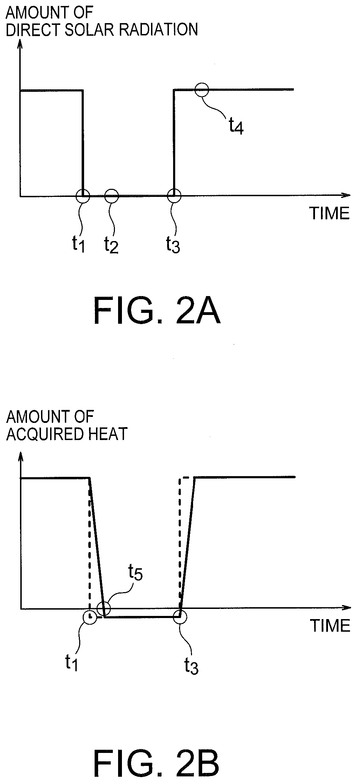

FIG. 2A and 2B are graphs showing an example of the amount of direct solar radiation and an amount of acquired heat in the solar heat collecting system of the first embodiment. FIG. 2A shows an example of change in the amount of direct solar radiation measured by the direct solar radiation meter 31 with time. A solid line in FIG. 2B shows change in the amount of acquired heat by the heat collector 1 with time with respect to the amount of direct solar radiation in FIG. 2A. The amount of acquired heat in FIG. 2B shows the amount of heat transferred to the exit of the heat collector 1, based on the assumption that the heat medium 11 in the heat collector 1 circulates. The total amount of acquired heat by the heat medium 11 is identical with the total amount of heat collected by the heat medium 11 in the heat collector 1 (shown by a dotted line in FIG. 2B).

The amount of direct solar radiation in FIG. 2A decreases to 0 W/m² at time t₁. Accordingly, when the predetermined value is 0 W/m², the pump 2 stops at time t₁. Thereafter the pump 2 is kept stopped until time t₃. On the other hand, the amount of direct solar radiation in FIG. 2A increases from 0 W/m² at time t₃. Accordingly, the operation of the pump 2 restarts at time t₃.

When the amount of direct solar radiation becomes zero, the amount of received heat by the heat collector 1 decreases to zero. However, the heat collector 1 radiates heat even when the amount of received heat by the heat collector 1 becomes zero. Accordingly, when the amount of direct solar radiation becomes zero, the amount of acquired heat by the heat collector 1 becomes a negative value, as shown in FIG. 2B. In FIG. 2B, the amount of direct solar radiation becomes zero at time t₁ so that the amount of acquired heat by the heat collector 1 is a negative value after time t₅.

The above phenomenon can be seen also in FIG. 18B. However, the absolute value of the negative value in FIG. 2B is smaller than that in FIG. 18B. The reason for this is that the pump 2 stops when the amount of direct solar radiation becomes zero in the present embodiment. Since the heat medium 11 is not transferred during stop of the pump 2, the amount of heat carried out from the heat collector 1 by the heat medium 11 is zero (for this reason, the amount of collected heat during stop of the pump 2 is zero). Accordingly, the absolute value of the negative value in FIG. 2B is smaller than that in FIG. 18B (the more detailed reason will be given later). Therefore, according to the present embodiment, an amount of wasted radiation from the heat collector 1 when the amount of direct solar radiation is zero can be reduced.

In the present embodiment, when the amount of direct solar radiation becomes zero, the pump 2 is stopped. If the pump 2 continues to operate after the amount of direct solar radiation becomes zero, the pump 2 operates even in a period when the amount of collected heat is a negative value. In this case, no energy can be acquired from sunrays in this period but the operation of the pump 2 consumes power. Accordingly, wasteful consumption of energy becomes large and the amount of acquired energy in the system considerably decreases. However, according to the present embodiment, when the amount of direct solar radiation becomes zero, the pump 2 is stopped. Accordingly, such wasteful consumption of energy can be reduced and decrease in the amount of acquired energy in the system can be suppressed.

When circulation of the heat medium 11 stops, heat transfer between the inner wall surface of the heat collector 1 and the heat medium 11 is not forced-convection heat transfer and the heat transfer coefficient between the inner wall surface of the heat collector 1 and the heat medium 11 is reduced. Accordingly, when circulation of the heat medium 11 stops, an amount of radiation from the heat medium 11 to the air through the heat collector 1 is reduced. As a result, the amount of collected heat from sunrise to sunset increases. This also contributes to increase in the amount of acquired energy in the present embodiment.

Circulation of the heat medium 11 may be stopped by a method other than stop of the pump 2. For example, circulation of the heat medium 11 may be stopped by fully closing an on-off valve (not illustrated) provided with the heat medium flow path 3. In this case, when this on-off valve is opened, circulation of the heat medium 11 can restart. The controller 32 controls the operation of this on-off valve.

As described above, in the present embodiment, circulation of the heat medium 11 in the heat collector 1 is controlled in accordance with the amount of solar radiation from sunrays. Therefore, according to the present embodiment, decrease in the amount of acquired energy in the solar heat collecting system caused by variation in the amount of collected heat by the heat collector 1 can be suppressed.

### (Second Embodiment)

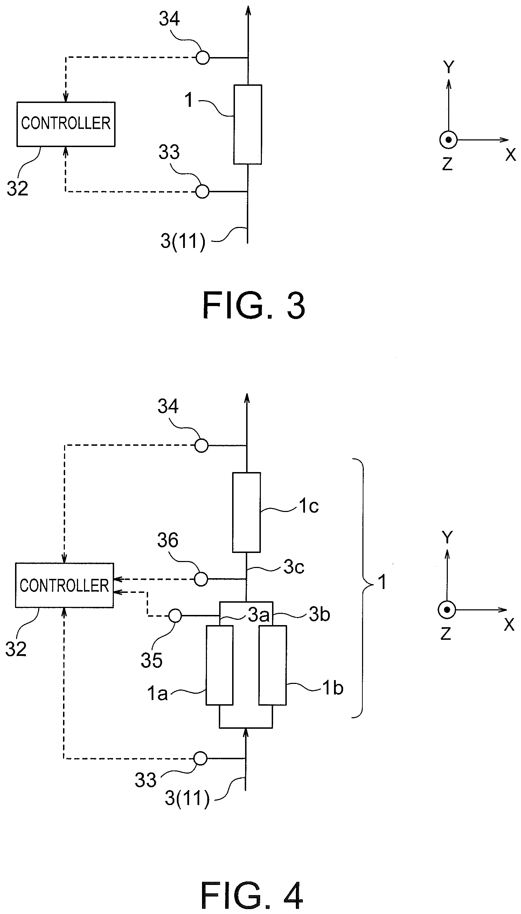

FIG. 3 is a schematic view showing a configuration of a solar heat collecting system of a second embodiment.

The solar heat collecting system in FIG. 3 includes thermometers 33 and 34 in addition to the components in FIG. 1. However, in FIG. 3, illustration of the direct solar radiation meter 31, the pump 2, the on-off valve 5, the heat utilizing fluid flow path 6, the heat storage tank 7 and the on-off valve 8 is omitted.

The thermometer 33 is arranged on the heat medium flow path 3 in the vicinity of the entrance of the heat collector 1 and measures the temperature (an entrance temperature) of the heat medium 11 at the entrance of the heat collector 1. The entrance of the heat collector 1 is an example of a first position. The entrance temperature of the heat collector 1 is an example of a first temperature. The thermometer 33 transmits the measurement result of the entrance temperature of the heat collector 1 to the controller 32.

The thermometer 34 is arranged on the heat medium flow path 3 in the vicinity of the exit of the heat collector 1 and measures the temperature (an exit temperature) of the heat medium 11 at the exit of the heat collector 1. The exit of the heat collector 1 is an example of a second position located downstream of the first position with respect to the heat medium. The exit temperature of the heat collector 1 is an example of a second temperature. The thermometer 34 transmits the measurement result of the exit temperature of the heat collector 1 to the controller 32.

The controller 32 controls circulation of the heat medium 11 in the heat collector 1 in accordance with a temperature difference between the entrance temperature received from the thermometer 33 and the exit temperature received from the thermometer 34. More specifically, when the pump 2 operates and the heat medium 11 circulates in the heat collector 1, the controller 32 stops the pump 2 in accordance with the temperature difference to stop circulation of the heat medium 11. In the present embodiment, the temperature difference is a value obtained by subtracting the entrance temperature from the exit temperature. When the temperature of the heat medium 11 increases in the heat collector 1, the temperature difference is positive. When the temperature of the heat medium 11 decreases in the heat collector 1, the temperature difference is negative.

The controller 32 controls circulation of the heat medium 11 in the heat collector 1 in accordance with the amount of direct solar radiation received from the direct solar radiation meter 31. More specifically, when the pump 2 stops and circulation of the heat medium 11 stops, the controller 32 restarts the operation of the pump 2 in accordance with the amount of direct solar radiation to restart circulation of the heat medium 11.

Hereinafter, the operation of the controller 32 in the present embodiment will be described.

The controller 32 continuously monitors the above temperature difference using the thermometers 33 and 34 and periodically compares the temperature difference with a predetermined value (a first predetermined value) that is determined in advance. The first predetermined difference is stored in the memory or storage of the controller 32, for example. The first predetermined value is 0°C or a value close to 0°C, for example. When the first predetermined value is 0°C, the comparison result between the temperature difference and the first predetermined value indicates whether the temperature of the heat medium 11 increases or decreases in the heat collector 1.

The controller 32 continuously monitors the amount of direct solar radiation using the direct solar radiation meter 31 and periodically compares the amount of direct solar radiation with a predetermined value (a second predetermined value). Similarly to the first predetermined value, the second predetermined value is stored in the memory or storage of the controller 32, for example. The second predetermined value is 0 W/m² or a value close to 0 W/m², for example.

In the case where the pump 2 operates and the heat medium 11 circulates in the heat collector 1, when temperature difference is larger than the first predetermined value, the controller 32 continues the operation of the pump 2. Thereby, circulation of the heat medium 11 in the heat collector 1 continues. On the other hand, in the case where the pump 2 operates and the heat medium 11 circulates in the heat collector 1, when the temperature difference becomes smaller than the first predetermined value, the controller 32 stops the pump 2. Thereby, circulation of the heat medium 11 in the heat collector 1 stops. When the temperature difference is equal to the first predetermined value, the controller 32 may continue circulation of the heat medium 11 or may stop circulation of the heat medium 11.

In this way, when the temperature difference becomes smaller than the first predetermined value, the controller 32 stops the pump 2 to stop circulation of the heat medium 11 in the heat collector 1. The amount of collected heat by the heat collector 1 is generally proportional to the temperature difference. For this reason, at a time when the temperature difference is 0°C, the amount of collected heat is zero. Time t₅ in FIGS. 2A and 2B is an example of such a time. When the predetermined value is 0 W/m² in the first embodiment, the pump 2 stops at time t₁ at which the amount of direct solar radiation becomes 0 W/m². On the other hand, when the first predetermined value is 0°C in the second embodiment, the pump 2 stops at time t₅ at which the temperature difference becomes 0°C and the amount of collected heat becomes zero.

In the case where the pump 2 stops and circulation of the heat medium 11 stops, when the amount of direct solar radiation is smaller than second predetermined value, the controller 32 keeps the pump 2 stopped. Thereby, circulation of the heat medium 11 is kept stopped. On the other hand, in the case where the pump 2 stops and circulation of the heat medium 11 stops, when the amount of direct solar radiation becomes larger than the second predetermined value, the controller 32 restarts the operation of the pump 2. Thereby, circulation of the heat medium 11 in the heat collector 1 restarts.

In this way, in the present embodiment, the temperature difference is used for determination to stop the pump 2 and the amount of direct solar radiation is used for determination to restart the operation of the pump 2. The reason for this is that when the pump 2 stops, the amount of collected heat from sunrays cannot be evaluated from the temperature difference.

As described above, in the preset embodiment, circulation of the heat medium 11 in the heat collector 1 is controlled in accordance with the temperature difference between an entrance temperature and an exit temperature. Therefore, according to the present embodiment, as in the first embodiment, decrease in the amount of acquired energy in the solar heat collecting system caused by variation in the amount of collected heat by the heat collector 1 can be suppressed.

In the case shown in FIGS. 20A and 20B, the amount of direct solar radiation in FIG. 20A becomes zero multiple times while the amount of collected heat in FIG. 20B is kept positive. In this case, the pump 2 stops at these times if the solar heat collecting system is that of the first embodiment. The stop and restart of the pump 2 are repeated at short intervals. If the stop and restart are repeated many times every day, the unfavorable serious deterioration of the pump 2 is caused. In contrast, in the solar heat collecting system of the second embodiment, the pump 2 does not stop even at these times. This is the advantage of the second embodiment. On the other hand, the first embodiment has an advantage that a time lag (for example, a time lag between time t₁ and time t₃) until the amount of direct solar radiation influences the temperature difference can be prevented from having an influence on control of circulation of the heat medium 11.

### (Third Embodiment)

FIG. 4 is a schematic view showing a configuration of a solar heat collecting system of a third embodiment.

The solar heat collecting system in FIG. 4 includes thermometers 35 and 36 in addition to the components in FIG. 3. However, in FIG. 4, illustration of the direct solar radiation meter 31, the pump 2, the on-off valve 5, the heat utilizing fluid flow path 6, the heat storage tank 7 and the on-off valve 8 is omitted.

The heat collector 1 in the present embodiment includes first to third heat collecting modules (heat collecting units) 1a to 1c. The first heat collecting module 1a and the second heat collecting module 1b are arranged in parallel with each other with respect to the heat medium 11. The third heat collecting module 1c is arranged in series with the first and second heat collecting modules 1a and 1b with respect to the heat medium 11. Each of the first to third heat collecting modules 1a to 1c in the present embodiment has a same structure as the heat collector 1 illustrated in FIGS. 12 and 13.

The first to third heat collecting modules 1a to 1c are connected with one another via the heat medium flow path 3. The heat medium flow path 3 includes a first flow path 3a provided with the first heat collecting module 1a, a second flow path 3b provided with the second heat collecting module 1b, and a third flow path 3c provided with the third heat collecting module 1c. The heat medium flow path 3 branches off into the first and second flow paths 3a and 3b. The first and second flow paths 3a and 3b join to the third flow path 3c.

The thermometer 35 is arranged on the first flow path 3a in the vicinity of the exit of the first heat collecting module 1a and measures the temperature (a first exit temperature) of the heat medium 11 at the exit of the first heat collecting module 1a. The thermometer 35 transmits the measurement result of the first exit temperature to the controller 32. The temperature (a first entrance temperature) of the heat medium 11 at the entrance of the heat collecting module 1a is measured by the thermometer 33. The first entrance temperature corresponds to the entrance temperature of the heat collector 1.

The thermometer 36 is arranged on the third flow path 3c in the vicinity of the entrance of the third heat collecting module 1c and measures the temperature (a third entrance temperature) of the heat medium 11 at the entrance of the third heat collecting module 1c. The thermometer 36 transmits the measurement result of the third entrance temperature to the controller 32. The temperature (a third exit temperature) of the heat medium 11 at the exit of the third heat collecting module 1c is measured by the thermometer 34. The third exit temperature corresponds to the exit temperature of the heat collector 1.

The controller 32 controls circulation of the heat medium 11 in the heat collector 1 in accordance with the temperature difference between the entrance temperature received from the thermometer 33 and the exit temperature received from the thermometer 34. More specifically, when the pump 2 operates and the heat medium 11 circulates in the heat collector 1, the controller 32 stops the pump 2 in accordance with this temperature difference to stop circulation of the heat medium 11.

In another embodiment, the controller 32 controls circulation of the heat medium 11 in the heat collector 1 in accordance with the temperature difference between the first entrance temperature from the thermometer 33 and the first exit temperature from the thermometer 35. In still another embodiment, the controller 32 controls circulation of the heat medium 11 in the heat collector 1 in accordance with the temperature difference between the third entrance temperature from the thermometer 36 and the third exit temperature from the thermometer 34. In these cases, a method of calculating the temperature difference and a method of setting the first predetermined value may be same as that used when the entrance temperature from the thermometer 33 and the exit temperature from the thermometer 34 are used.

The controller 32 controls circulation of the heat medium 11 in the heat collector 1 in accordance with the amount of direct solar radiation received from the direct solar radiation meter 31. More specifically, when the pump 2 stops and circulation of the heat medium 11 stops, the controller 32 restarts the operation of the pump 2 in accordance with the amount of direct solar radiation to restart circulation of the heat medium 11.

According to the present embodiment, as in the first and second embodiments, decrease in the amount of acquired energy in the solar heat collecting system can be suppressed.

The number of the heat collecting modules 1a to 1c in the heat collector 1 in FIG. 4 is three. However, the number may be two, four or more.

### (Fourth Embodiment)

A solar heat collecting system of a fourth embodiment has a configuration illustrated in FIG. 4.

When the pump 2 operates and the heat medium 11 circulates in the heat collector 1, the controller 32 in the present embodiment stops circulation of the heat medium 11 in accordance with the temperature difference between the entrance temperature received from the thermometer 33 and the exit temperature received from the thermometer 34. The exit temperature from the thermometer 34 may be replaced with the first exit temperature from the thermometer 35. Similarly, the entrance temperature from the thermometer 33 may be replaced with the third entrance temperature from the thermometer 36. Furthermore, when the pump 2 stops and circulation of the heat medium 11 in the heat collector 1 stops, the controller 32 in the present embodiment restarts circulation of the heat medium 11 in accordance with the amount of direct solar radiation from the direct solar radiation meter 31. The above operations are same as those in the third embodiment.

However, when the heat medium 11 circulates in the heat collector 1, the controller 32 in the present embodiment continues the operation of the pump 2 as long as a time period in which the temperature difference is smaller than the first predetermined value shorter than predetermined time. On the other hand, when the heat medium 11 circulates in the heat collector 1 and a time period in which the temperature difference is smaller than the first predetermined value lasts longer than the predetermined time, the controller 32 stops the pump 2. Thereby, circulation of the heat medium 11 in the heat collector 1 stops. When a time period in which the temperature difference is smaller than the first predetermined value lasts for the predetermined time, the controller 32 may continue circulation of the heat medium 11 or may stop circulation of the heat medium 11. The predetermined time is stored in the memory or storage of the heat controller 32, for example, similarly to in the first and second predetermined values.

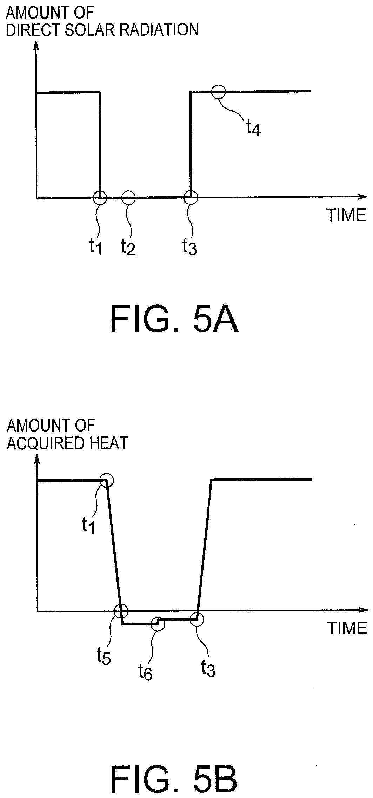

FIGS. 5A and 5B are graphs showing an example of the amount of direct solar radiation and the amount of acquired heat in the solar heat collecting system of the fourth embodiment. FIG. 5A shows an example of change in the amount of direct solar radiation measured by the direct solar radiation meter 31 with time. FIG. 5B shows change in the amount of acquired heat by the heat collector 1 with time with respect to the amount of direct solar radiation in FIG. 5A.

In FIG. 5B, since the temperature difference becomes 0°C at time t₅, the amount of acquired heat becomes zero at time t₅. Furthermore, in FIG. 5B, since the temperature difference is kept below 0°C after time t₅, the amount of acquired heat is kept negative after time t₅. Accordingly, when the first predetermined value is 0°C and a time period in which the temperature difference is smaller than 0°C lasts longer than predetermined time after time t₅, the pump 2 stops. Time t₆ in FIG. 5B represents a time at which a time period in which the temperature difference is smaller than 0°C reaches the predetermined time. As a result, the amount of acquired heat in FIG. 5B increases at time t₆. Thereafter, the pump 2 is kept stopped until time t₃. The amount of acquired heat in FIG. 5B represents an amount of heat transferred to the exit of the heat collector 1 based on the assumption that the heat medium 11 in the heat collector 1 circulates.

According to the present embodiment, as in the first to third embodiments, decrease in the amount of acquired energy in the solar heat collecting system can be suppressed.

In the first embodiment, when the amount of direct solar radiation becomes zero and a positive value repeatedly as shown in FIG. 19A, the stop and restart of the pump 2 are repeated multiple times. Similarly, in the second and third embodiments, when the temperature difference becomes a positive value and a negative value repeatedly, the stop and restart of the pump 2 are repeated multiple times. This is generally undesirable for the pump 2. In contrast, in the present embodiment, even when the temperature difference becomes a positive value and a negative value repeatedly, it can be avoided that the stop and restart of the pump 2 are repeated multiple times.

### (Fifth Embodiment)

A solar heat collecting system of a fifth embodiment has a configuration illustrated in FIG. 4.

When the pump 2 operates and the heat medium 11 circulates in the heat collector 1, the controller 32 in the present embodiment stops circulation of the heat medium 11 in accordance with the temperature difference between the entrance temperature received from the thermometer 33 and the exit temperature received from the thermometer 34. The exit temperature from the thermometer 34 may be replaced with the first exit temperature from the thermometer 35. Similarly, the entrance temperature from the thermometer 33 may be replaced with the third entrance temperature from the thermometer 36. Furthermore, when the pump 2 stops and circulation of the heat medium 11 stops, the controller 32 in the present embodiment restarts circulation of the heat medium 11 in accordance with the amount of direct solar radiation from the direct solar radiation meter 31. The above operations are same as those in the third and fourth embodiments.

However, during stop of circulation of the heat medium 11, the controller 32 in the present embodiment keeps the pump 2 stopped as long as a time period in which the amount of direct solar radiation is larger than the second predetermined value is shorter than predetermined time. On the other hand, when circulation of the heat medium 11 stops and a time period in which the amount of direct solar radiation is larger than the second predetermined value lasts longer than the predetermined time, the controller 32 restarts the operation of the pump 2. Thereby, circulation of the heat medium 11 in the heat collector 1 restarts. When a time period in which the amount of direct solar radiation is larger than the second predetermined value lasts for the predetermined time, the controller 32 may keep circulation of the heat medium 11 stopped or may restart circulation of the heat medium 11. Similarly to the first and second predetermined values, the predetermined time is stored in the memory or storage of the controller 32, for example.

When the method of stopping circulation in the fourth embodiment and the method of restarting circulation in the fifth embodiment are combined, the value of the predetermined time for restarting circulation may be same as or may be different from the predetermined time for stopping circulation. The method of restarting circulation in the fifth embodiment can be combined with the method of stopping circulation in the first or second embodiment.

According to the present embodiment, as in the first to fourth embodiments, decrease in the amount of acquired energy in the solar heat collecting system can be suppressed. Furthermore, according to the present embodiment, even when the amount of direct solar radiation becomes zero and a positive value repeatedly, it can be avoided that stop and restart of the pump 2 are repeated many times.

### (Sixth Embodiment)

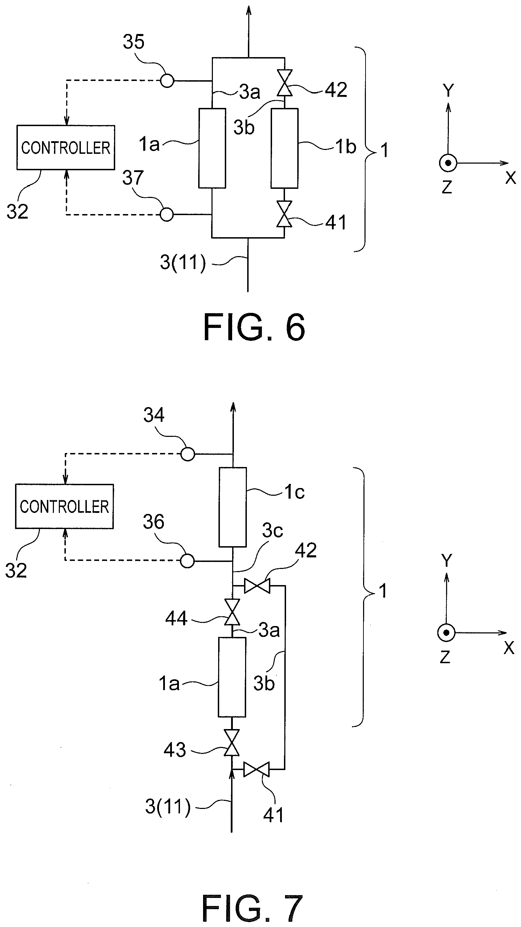

FIG. 6 is a schematic view showing a configuration of a solar heat collecting system of a sixth embodiment.

The solar heat collecting system in FIG. 6 has a configuration that is obtained by eliminating the third heat collecting module 1c, the third flow path 3c, and the thermometers 33, 34, and 36 from the system in FIG. 4 and adding a thermometer 37 and on-off valves 41 and 42 thereto. The first heat collecting module 1a and the second heat collecting module 1b are arranged in parallel with each other with respect to the heat medium 11.

The thermometer 37 is arranged on the first flow path 3a in the vicinity of the entrance of the first heat collecting module 1a and measures the temperature (the first entrance temperature) of the heat medium 11 at the entrance of the first heat collecting module 1a. The thermometer 37 transmits the measurement result of the first entrance temperature to the controller 32.

The thermometer 35 is arranged on the first flow path 3a in the vicinity of the exit of the first heat collecting module 1a and measures the temperature (the first exit temperature) of the heat medium 11 at the exit of the first heat collecting module 1a. The thermometer 35 transmits the measurement result of the first exit temperature to the controller 32.

The on-off valve 41 is arranged on the second flow path 3b upstream of the entrance of the second heat collecting module 1b. The on-off valve 42 is arranged on the second flow path 3b downstream of the exit of the second heat collecting module 1b. In the present embodiment, the on-off valves 41 and 42 are opened/closed under control by the controller 32. When the on-off valves 41 and 42 are opened during the operation of the pump 2, the heat medium 11 circulates in the second heat collecting module 1b. When the on-off valves 41 and 42 are closed during the operation of the pump 2, circulation of the heat medium 11 in the second heat collecting module 1b stops. In this way, while the operation and stop of the pump 2 can be used to control circulation of the heat medium 11 in the entire heat collector 1, opening/closing of the on-off valves 41 and 42 can be used to control circulation of the heat medium 11 in a part of the heat collector 1.

The controller 32 controls circulation of the heat medium 11 in the heat collector 1 in accordance with the temperature difference between the first entrance temperature from the thermometer 37 and the first exit temperature from the thermometer 35. More specifically, in the case where the pump 2 operates and the heat medium 11 circulates in the heat collector 1, when the temperature difference is larger than the predetermined value, the controller 32 keeps the on-off valves 41 and 42 open. On the other hand, in the case where the pump 2 operates, when the temperature difference becomes smaller than the predetermined value, the controller 32 fully closes the on-off valves 41 and 42. As a result, circulation of the heat medium 11 in the first heat collecting module 1a is kept while circulation of the heat medium 11 in the second heat collecting module 1b stops. Accordingly, the amount of radiation from the heat collector 1 is reduced.

In this case, the controller 32 closes the on-off valves 41 and 42 and reduces the flow rate in the pump 2. As a result, the flow rate of the heat medium 11 in the heat collector 1 after the on-off valves 41 and 42 are closed decreases from that before the on-off valves 41 and 42 are closed. Accordingly, the amount of radiation from the heat collector 1 is further reduced. This is also true in seventh and eighth embodiment, which will be described later. The first heat collecting module 1a is an example of the first portion. The second heat collecting module 1b is an example of the second portion.

In the case where the on-off valves 41 and 42 are closed and circulation of the heat medium 11 in the second heat collecting module 1b stops, when the temperature difference is smaller than the predetermined value, the controller 32 keeps the on-off valve 41 and 42 closed. On the other hand, in the case where the on-off valves 41 and 42 are closed, when the temperature difference becomes larger than the predetermined value, the controller 32 opens the on-off valves 41 and 42. As a result, circulation of the heat medium 11 in the second heat collecting module 1b restarts so that the heat medium 11 circulates in the first and second heat collecting modules 1a and 1b.

In this case, the controller 32 opens the on-off valves 41 and 42 and increases the flow rate in the pump 2. For example, the controller 32 returns the flow rate in the pump 2 to a value before the on-off valves 41 and 42 are closed. As a result, the flow rate of the heat medium 11 in the heat collector 1 after the on-off valves 41 and 42 are opened increases from that before the on-off valves 41 and 42 are opened. This is also true in the seventh and eighth embodiments, which will be described later.

As described above, in the present embodiment, stop and restart of circulation of the heat medium 11 in a part of the heat collector 1 and the flow rate of the heat medium 11 in the heat collector 1 are controlled in accordance with the temperature difference between the entrance temperature and the exit temperature. Accordingly, power consumption in the pump 2 can be reduced, and the amount of radiation can be also reduced. If the solar heat collecting system in FIG. 6 does not include the direct solar radiation meter 31 and circulation of the heat medium 11 in both the first and second heat collecting modules 1a and 1b stops, the system has no criterion for determining restart of circulation of the heat medium 11. However, in the present embodiment, the temperature difference that is obtained by using the thermometers 35 and 37 serves as a criterion for determination. Consequently, even when the solar heat collecting system in FIG. 6 does not include the direct solar radiation meter 31, power consumption in the pump 2 can be reduced. Furthermore, even if the flow rate in the pump 2 is not reduced, the amount of radiation from the first heat collecting module 1a can be reduced. Therefore, according to the present embodiment, decrease in the amount of acquired energy in the solar heat collecting system caused by variation in the amount of collected heat by the heat collector 1 can be suppressed.

According to the present embodiment, restart of circulation of the heat medium 11 can be controlled in accordance with temperatures so that the direct solar radiation meter 31 can be omitted.

Depending on the starting characteristic of the solar heat collecting system, circulation of the heat medium 11 is desired to be kept for the entire system in some cases. In this case, to reduce power consumption in the pump 2, it suffices that circulation of the heat medium 11 stops only in a part of the system. Even if the flow rate in the pump 2 is not reduced, it is possible to decrease the amount of radiation from the second heat collecting module 11b in which circulation of the heat medium 11 stops.

The number of the heat collecting modules 1a and 1b of the heat collector 1 in FIG. 6 are two, but may be three or more. In this case, valves similar to the on-off valves 41 and 42 may be arranged at upstream and downstream sides of two or more heat collecting modules. Thereby, the controller 32 can control stop and restart of circulation of the heat medium 11 in the two or more heat collecting modules.

### (Seventh Embodiment)

A solar heat collecting system of the seventh embodiment has the configuration illustrated in FIG. 6.

The controller 32 in the present embodiment controls circulation of the heat medium 11 in the heat collector 1 in accordance with the temperature difference between the first entrance temperature from the thermometer 37 and the first exit temperature from the thermometer 35. More specifically, when the pump 2 operates and the heat medium 11 circulates in the heat collector 1, the controller 32 keeps the on-off valves 41 and 42 open as long as a time in which the temperature difference is smaller than the predetermined value is shorter than predetermined time. On the other hand, when the pump 2 operates and a time in which the temperature difference is smaller than the predetermined value lasts longer than the predetermined time, the controller 32 fully closes the on-off valves 41 and 42. As a result, while circulation of the heat medium 11 in the first heat collecting module 1a is kept, circulation of the heat medium 11 in the second heat collecting module 1b stops.

When the on-off valves 41 and 42 are closed and circulation of the heat medium 11 in the second heat collecting module 1b stops, the controller 32 keeps the on-off valves 41 and 42 closed as long as a time in which the temperature difference is larger than the predetermined value is shorter than predetermined time. On the other hand, when the on-off valves 41 and 42 are closed and a time in which the temperature difference is larger than the predetermined value lasts longer than the predetermined time, the controller 32 opens the on-off valves 41 and 42. As a result, circulation of the heat medium 11 in the second heat collecting module 1b restarts and the heat medium 11 circulates in the first and second heat collecting modules 1a and 1b.

According to the present embodiment, as in the sixth embodiment, decrease in the amount of acquired energy in the solar heat collecting system can be suppressed. Furthermore, according to the present embodiment, restart of circulation of the heat medium 11 can be controlled in accordance with temperatures so that the direct solar radiation meter 31 can be omitted.

In the case shown in FIGS. 20A and 20B, the amount of direct solar radiation in FIG. 20A becomes zero multiple times while the amount of collected heat in FIG. 20B is kept positive. In this case, the pump 2 stops at these times if the solar heat collecting system is that of the first embodiment. However, in the seventh embodiment, the operation and stop of the pump 2 is replaced with opening and closing of the on-off valves 41 and 42 and the on-off valves 41 and 42 are closed at these times. Opening and closing of the on-off valves 41 and 42 are repeated at short intervals. If such opening and closing are repeated many times every day, the unfavorable serious deterioration of the on-off valves 41 and 42 is caused. In contrast, in the solar heat collecting system of the seventh embodiment, the on-off valves 41 and 42 are still opened at these times. This is the advantage of the seventh embodiment.

### (Eighth Embodiment)

A solar heat collecting system of an eighth embodiment has the configuration illustrated in FIG. 6.

The controller 32 in the present embodiment controls circulation of the heat medium 11 in the heat collector 1 in accordance with the amount of direct solar radiation from the direct solar radiation meter 31. More specifically, when the pump 2 operates and the heat medium 11 circulates in the heat collector 1, the controller 32 keeps the on-off valves 41 and 42 open as long as a time in which the amount of direct solar radiation is smaller than the predetermined value is shorter than predetermined time. On the other hand, when the pump 2 operates and a time in which the amount of direct solar radiation is smaller than the predetermined value is longer than the predetermined time, the controller 32 fully closes the on-off valves 41 and 42. As a result, while circulation of the heat medium 11 in the first heat collecting module 1a is kept, circulation of the heat medium 11 in the second heat collecting module 1b stops.

When the on-off valves 41 and 42 are closed and circulation of the heat medium 11 in the heat collecting module 1b stops, the controller 32 keeps the on-off valves 41 and 42 closed as long as a time period in which the amount of direct solar radiation is larger than the predetermined time is shorter than the predetermined time. On the other hand, when the on-off valves 41 and 42 are closed and a time period in which the amount of direct solar radiation is larger than the predetermined value lasts longer than the predetermined time, the controller 32 opens the on-off valves 41 and 42. As a result, circulation of the heat medium 11 in the second heat collecting module 1b restarts and the heat medium 11 circulates in the first and second heat collecting modules 1a and 1b.

According to the present embodiment, as in the sixth and seventh embodiments, decrease in the amount of acquired energy in the solar heat collecting system can be suppressed. In the present embodiment, instead of comparing a time in which the amount of direct solar radiation is smaller or larger than the predetermined value with the predetermined time, the amount of direct solar radiation and the predetermined value may be compared to control circulation of the heat medium 11.

Depending on the starting characteristic of the solar heat collecting system, circulation of the heat medium 11 is desired to be kept for the entire system in some cases. In this case, to reduce power consumption in the pump 2, it suffices that circulation of the heat medium 11 stops only in a part of the system. Even if the flow rate in the pump 2 is not reduced, it is possible to decrease the amount of radiation from the second heat collecting module 1b in which circulation of the heat medium 11 stops.

In the case shown in FIGS. 20A and 20B, the amount of direct solar radiation in FIG. 20A becomes zero multiple times while the amount of collected heat in FIG. 20B is kept positive. In this case, the pump 2 stops at these timings if the solar heat collecting system is that of the first embodiment. However, in the eighth embodiment, the operation and stop of the pump 2 is replaced with opening and closing of the on-off valves 41 and 42, and the on-off valves 41 and 42 are closed at these times. Opening and closing of the on-off valves 41 and 42 are repeated at short intervals. If such opening and closing are repeated many times every day, the unfavorable serious deterioration of the on-off valves 41 and 42 is caused. In contrast, in the solar heat collecting system of the eighth embodiment, the on-off valves 41 and 42 are still opened at these times. This is the advantage of the eighth embodiment.

### (Ninth Embodiment)

FIG. 7 is a schematic view showing a configuration of a solar heat collecting system of a ninth embodiment.

The solar heat collecting system in FIG. 7 has a configuration that is obtained by eliminating the second heat collecting module 1b and the thermometers 33 and 35 from the system in FIG. 4 and adding on-off valves 41 to 44 thereto. The first heat collecting module 1a and the third heat collecting module 1c are arranged in series with respect to the heat medium 11. The second flow path 3b in the present embodiment can be used as a bypass flow path in which the heat medium 11 flows to bypass the first heat collecting module 1a.

The on-off valve 41 is arranged in the vicinity of the entrance of the second flow path 3b. The on-off valve 42 is arranged in the vicinity of the exit of the second flow path 3b. The on-off valve 43 is arranged on the first flow path 3a upstream of the entrance of the first heat collecting module 1a. The on-off valve 44 is arranged on the first flow path 3a downstream of the exit of the first heat collecting module 1a. The on-off valves 41 to 44 are opened/closed under control by the controller 32.

When the on-off valves 41 and 42 are closed and the on-off valves 43 and 44 are opened during the operation of the pump 2, the heat medium 11 circulates in the first and third heat collecting modules 1a and 1c. When the on-off valves 41 and 42 are opened and the on-off valves 43 and 44 are closed during the operation of the pump 2, circulation of the heat medium 11 in the first heat collecting module 1a stops and the heat medium 11 circulates only in the third heat collecting module 1c. At this time, the heat medium 11 bypasses the first heat collecting module 1a to circulate in the second flow path 3c. In this way, while the operation and stop of the pump 2 can be used to control circulation of the heat medium 11 in the entire heat collector 1, opening/closing of the on-off valves 41 to 44 can be used to control circulation of the heat medium 11 in a part of the heat collector 1.

The controller 32 controls circulation of the heat medium 11 in the heat collector 1 in accordance with the temperature difference between the third entrance temperature from the thermometer 36 and the third exit temperature from the thermometer 34. More specifically, in the case where the pump 2 operates and the heat medium 11 circulates in the heat collector 1, when the temperature difference is larger than the predetermined value, the controller 32 keeps the on-off valves 41 and 42 open and fully closes the on-off valves 43 and 44. On the other hand, in the case where the pump 2 operates, when the temperature difference becomes smaller than the predetermined value, the controller 32 opens the on-off valves 41 and 42 and fully closes the on-off valves 43 and 44. As a result, while circulation of the heat medium 11 in the third heat collecting module 1c is kept, circulation of the heat medium 11 in the first heat collecting module 1a stops so that the amount of radiation from the heat collector 1 is reduced.

In this case, the controller 32 closes the on-off valves 43 and 44 and reduces the flow rate in the pump 2. As a result, the flow rate of the heat medium 11 in the heat collector 1 after the on-off valves 43 and 44 are closed becomes lower than that before the on-off valves 43 and 44 are closed so that the amount of radiation from the heat collector 1 is further reduced. This is also true in tenth and eleventh embodiments, which will be described later. The third heat collecting module 1c is an example of the first portion. The first heat collecting module 1a is an example of the second portion.

In the case where the on-off valves 43 and 44 are closed and circulation of the heat medium 11 in the first heat collecting module 1a stops, when the temperature difference is smaller than the predetermined value, the controller 32 keeps the on-off valves 41 and 42 open and the on-off valves 43 and 44 fully closed. On the other hand, when the on-off valves 43 and 44 are closed and the temperature difference becomes larger than the predetermined value, the controller 32 fully closes the on-off valves 41 and 42 and opens the on-off valves 43 and 44. As a result, circulation of the heat medium 11 in the first heat collecting module 1a restarts and the heat medium 11 circulates in the first and third heat collecting modules 1a and 1c. Since the on-off valves 41 and 42 are closed, use of the second flow path 3b is released.

In this case, the controller 32 opens the on-off valves 43 and 44 and increases the flow rate in the pump 2. For example, the flow rate in the pump 2 is returned to a value before the on-off valves 43 and 44 are closed. As a result, the flow rate of the heat medium 11 in the heat collector 1 after the on-off valves 43 and 44 are opened becomes higher than that before the on-off valves 43 and 44 are opened. This is also true in the tenth and eleventh embodiments, which will be described later.

As described above, in the present embodiment, stop and restart of circulation of the heat medium 11 in a part of the heat collector 1 and the flow rate of the heat medium 11 in the heat collector 1 are controlled in accordance with the temperature difference between the entrance temperature and the exit temperature. Therefore, according to the present embodiment, decrease in the amount of acquired energy in the solar heat collecting system caused by variation in the amount of collected heat by the heat collector 1 can be suppressed.

According to the present embodiment, restart of circulation of the heat medium 11 can be controlled in accordance with temperatures so that the direct solar radiation meter 31 can be omitted.

The number of the heat collecting modules 1a and 1c in FIG. 7 are two, but may be three or more. In this case, valves similar to the on-off valves 43 and 44 may be arranged at upstream and downstream sides of two or more heat collecting modules. Thereby, the controller 32 can control stop and restart of circulation of the heat medium 11 in the two or more heat collecting modules.

Depending on the starting characteristic of the solar heat collecting system, circulation of the heat medium 11 is desired to be kept for the entire system in some cases. In this case, to reduce power consumption in the pump 2, it suffices that circulation of the heat medium 11 stops only in a part of the system. Even if the flow rate in the pump 2 is not reduced, it is possible to decrease the amount of radiation from the first heat collecting module 1a in which circulation of the heat medium 11 stops.

### (Tenth Embodiment)

A solar heat collecting system of a tenth embodiment has the configuration illustrated in FIG. 7.

The controller 32 in the present embodiment controls circulation of the heat medium 11 in the heat collector 1 in accordance with the temperature difference between the third entrance temperature from the thermometer 36 and the third exit temperature from the thermometer 34. More specifically, when the pump 2 operates and the heat medium 11 circulates in the heat collector 1, the controller 32 keeps the on-off valves 41 and 42 fully closed and the on-off valves 43 and 44 open as long as a time in which the temperature difference is smaller than the predetermined value is shorter than predetermined time. On the other hand, when the pump 2 operates and a time in which the temperature difference is smaller than the predetermined value lasts longer than the predetermined time, the controller 32 opens the on-off valves 41 and 42 and fully closes the on-off valves 43 and 44. As a result, while circulation of the heat medium 11 in the third heat collecting module 1c is kept, circulation of the heat medium 11 in the first heat collecting module 1a stops.

When the on-off valves 43 and 44 are closed and circulation of the heat medium 11 in the first heat collecting module 1a stops, the controller 32 keeps the on-off valves 41 and 42 open and the on-off valves 43 and 44 fully closed as long as a time period in which the temperature difference is larger than the predetermined value is shorter than predetermined time. On the other hand, when the on-off valves 43 and 44 are closed and a time in which the temperature difference is larger than the predetermined value lasts longer than the predetermined time, the controller 32 fully closes the on-off valves 41 and 42 and opens the on-off valves 43 and 44. As a result, circulation of the heat medium 11 in the first heat collecting module 1a restarts and the heat medium 11 circulates in the first and third heat collecting modules 1a and 1c. Since the on-off valves 41 and 42 are closed, use of the second flow path 3b is released.

According to the present embodiment, as in the ninth embodiment, decrease in the amount of acquired energy in the solar heat collecting system can be suppressed. Furthermore, according to the present embodiment, restart of circulation of the heat medium 11 can be controlled in accordance with temperatures so that the direct solar radiation meter 31 can be omitted.

Depending on the starting characteristic of the solar heat collecting system, circulation of the heat medium 11 is desired to be kept for the entire system in some cases. In this case, to reduce power consumption in the pump 2, it suffices that circulation of the heat medium 11 stops only in a part of the system. Even if the flow rate in the pump 2 is not reduced, it is possible to decrease the amount of radiation from the first heat collecting module 11a in which circulation of the heat medium 11 stops.

In the case shown in FIGS. 20A and 20B, the amount of direct solar radiation in FIG. 20A becomes zero multiple times while the amount of collected heat in FIG. 20B is kept positive. In this case, the pump 2 stops at these times if the solar heat collecting system is that of the first embodiment. However, in the tenth embodiment, the operation and stop of the pump 2 is replaced with opening and closing of the on-off valves 41 to 44 and the on-off valves 43 and 44 are closed at these times. Opening and closing of the on-off valves 41 to 44 are repeated at short intervals. If such opening and closing are repeated many times every day, the unfavorable serious deterioration of the on-off valves 41 to 44 is caused. In contrast, in the solar heat collecting system of the tenth embodiment, the on-off valves 41 and 43 are still opened at these times. This is the advantage of the tenth embodiment.

### (Eleventh Embodiment)

A solar heat collecting system of an eleventh embodiment has the configuration illustrated in FIG. 7.

The controller 32 in the present embodiment controls circulation of the heat medium 11 in the heat collector 1 in accordance with the amount of direct solar radiation from the direct solar radiation meter 31. More specifically, when the pump 2 operates and the heat medium 11 circulates in the heat collector 1, the controller 32 keeps the on-off valves 41 and 42 fully closed and keeps the on-off valves 43 and 44 open as long as a time period in which the amount of direct solar radiation is smaller than the predetermined value is shorter than predetermined time. On the other hand, when the pump 2 operates and a time period in which the amount of direct solar radiation is smaller than the predetermined value lasts longer than the predetermined time, the controller 32 opens the on-off valves 41 and 42 and fully closes the on-off valves 43 and 44. As a result, while circulation of the heat medium 11 in the third heat collecting module 1c is kept, circulation of the heat medium 11 in the first heat collecting module 1a stops.

When the on-off valves 43 and 44 are closed and circulation of the heat medium 11 in the first heat collecting module 1a stops, the controller 32 keeps the on-off valves 41 and 42 open and the on-off valves 43 and 44 fully closed as long as a time period in which the amount of direct solar radiation is larger than the predetermined value is shorter than the predetermined time. On the other hand, when the on-off valves 43 and 44 are closed and a time period in which the amount of direct solar radiation is larger than the predetermined value lasts longer than the predetermined time, the controller 32 fully closes the on-off valves 41 and 42 and opens the on-off valves 43 and 44. As a result, circulation of the heat medium 11 in the first heat collecting module 1a restarts and the heat medium 11 circulates in the first and third heat collecting modules 1a and 1c. Since the on-off valves 41 and 42 are closed, use of the second flow path 3b is released.

According to the present embodiment, as in the ninth and tenth embodiments, decrease in the amount of acquired energy in the solar heat collecting system can be suppressed. In the present embodiment, instead of comparing a time in which the amount of direct solar radiation is smaller or larger than the predetermined value with the predetermined time, the amount of direct solar radiation and the predetermined value may be compared to control circulation of the heat medium 11.

Depending on the starting characteristic of the solar heat collecting system, circulation of the heat medium 11 is desired to be kept for the entire system in some cases. In this case, to reduce power consumption in the pump 2, it suffices that circulation of the heat medium 11 stops only in a part of the system. Even if the flow rate in the pump 2 is not reduced, it is possible to decrease the amount of radiation from the first heat collecting module 1a in which circulation of the heat medium 11 stops.

In the case shown in FIGS. 20A and 20B, the amount of direct solar radiation in FIG. 20A becomes zero multiple times while the amount of collected heat in FIG. 20B is kept positive. In this case, the pump 2 stops at these times if the solar heat collecting system is that of the first embodiment. However, in the eleventh embodiment, the operation and stop of the pump 2 is replaced with opening and closing of the on-off valves 41 to 44 and the on-off valves 43 and 44 are closed at these times. Opening and closing of the on-off valves 41 to 44 are repeated at short intervals. If such opening and closing are repeated many times every day, the unfavorable serious deterioration of the on-off valves 41 to 44 is caused. In contrast, in the solar heat collecting system of the eleventh embodiment, the on-off valves 41 and 43 are still opened at these times. This is the advantage of the eleventh embodiment.

### (Twelfth Embodiment)

The operation of the heat collector 1 in a twelfth embodiment will be described with reference to FIG. 13. The heat collector 1 in the present embodiment is installed in the solar heat collecting system of any one of the first to eleventh embodiments. This is also true for the heat collector 1 in thirteenth to fifteenth embodiments, which will be described later.

When the heat medium 11 circulates in the heat collector 1, the heat collector 1 in the present embodiment operates to concentrate sunrays to the heat collecting pipe 22, as illustrated in FIG. 13. Also when circulation of the heat medium 11 stops in all or part of the entire heat collector 1, the heat collector 1 in the present embodiment operates to concentrate sunrays to the heat collecting pipe 22. That is, the reflecting mirrors 21 in the present embodiment continues to rotate to adjust the focal point of sunrays to the heat collecting pipe 22 both when the heat medium 11 circulates and when circulation of the heat medium 11 stops. The heat collector 1 rotates the reflecting mirror 21 to track the altitude of the sun. Accordingly, sunrays can be concentrated to the heat collecting pipe 22.

According to the present embodiment, even when circulation of the heat medium 11 stops, the heat collector 1 continues to concentrate lights. Consequently, when circulation of the heat medium 11 restarts, the heat collector 1 can restart to collect heat immediately.

When the heat collector 1 in the twelfth embodiment includes a plurality of heat collecting modules as in FIGS. 4, 6 and 7, control of rotation of the reflecting mirror 21 that has been described in the twelfth embodiment can be performed for each heat collecting module.

### (Thirteenth Embodiment)

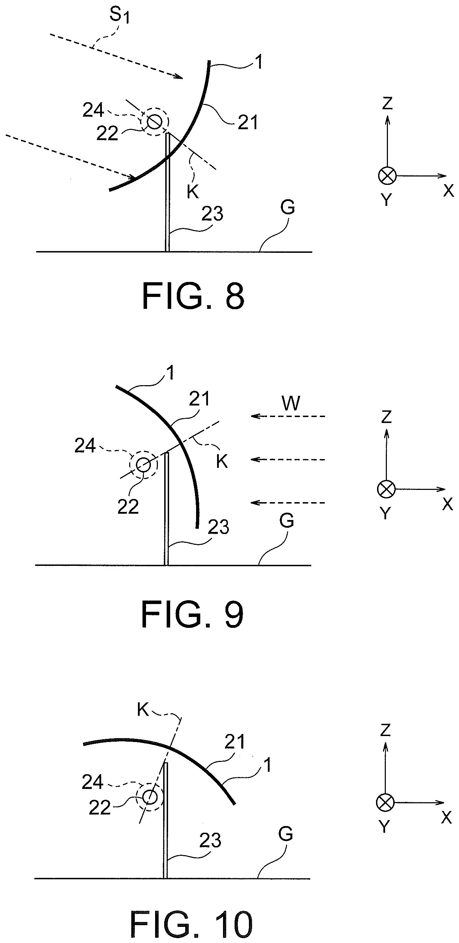

FIG. 8 is a sectional view for explaining the operation of the heat collector 1 of a thirteenth embodiment.

When the heat medium 11 circulates in the heat collector 1, the heat collector 1 in the present embodiment operates to concentrate sunrays to the heat collecting pipe 22 (see FIG. 13). However, when circulation of the heat medium 11 stops in all or part of the heat collector 1, the heat collector 1 in the present embodiment operates not to concentrate sunrays to the heat collecting pipe 22, as illustrated in FIG. 8. That is, circulation of the heat medium 11 stops, the reflecting mirror 21 in the present embodiment is rotated and moved to a position not to adjust the focal point of sunrays to the heat collecting pipe 22. When circulation of the heat medium 11 in the heat collector 1 restarts, the heat collector 1 in the present embodiment operates to restart concentration of sunrays to the heat collecting pipe 22.

According to the present embodiment, concentration of lights by the heat collector 1 is stopped during stop of circulation of the heat medium 11 so that deterioration of the heat medium 11 in the heat collecting pipe 22 caused by a high temperature can be prevented. When the sun suddenly appears from a cloud, the amount of direct solar radiation is sufficient but the flow rate in the pump 2 may be sufficiently low or zero depending on the starting characteristic of the pump 2. At that time, when the focal point of sunrays is adjusted to the heat collecting pipe 22, the temperature of the heat medium 11 becomes locally high and the heat medium 11 in this local area is deteriorated. However, when the focal point of sunrays is not adjusted to the heat collecting pipe 22 as in the present embodiment, such deterioration can be prevented. The operation of the present embodiment is efficient, for example, when the flow rate of the heat medium 11 is zero or low during stop of circulation of the heat medium 11 or after restart of circulation of the heat medium 11.

When the heat collector 1 in the thirteenth embodiment includes a plurality of heat collecting modules as in FIGS. 4, 6 and 7, control of rotation of the reflecting mirror 21 that has been described in the thirteenth embodiment can be performed for each heat collecting module.

### (Fourteenth Embodiment)

FIG. 9 is a sectional view for explaining the operation of the heat collector 1 of a fourteenth embodiment.

When circulation of the heat medium 11 stops in all or part of the heat collector 1, the heat collector 1 in the present embodiment turns the convex surface of the reflecting mirror 21 to the upstream side of a wind W and moves the reflecting mirror 21 to the upstream side of the wind W upstream of the heat collecting pipe 22. In FIG. 9, since the wind W blows in the -X direction, the convex surface of the reflecting mirror 21 is directed to the +X direction. When circulation of the heat medium 11 in the heat collector 1 restarts, the heat collector 1 in the present embodiment rotates the reflecting mirror 21 to restart concentration of sunrays to the heat collecting pipe 22. The reflecting mirror 21 is an example of a light concentrating panel. The heat collecting pipe 22 is an example of a portion where heat is collected by concentration of lights.

According to the present embodiment, the flow rate of the wind W (an air flow) blowing to the heat collecting pipe 22 can be reduced by the reflecting mirror 21. Therefore, according to the present embodiment, the forced-convection heat transfer coefficient from the heat collecting pipe 22 to the air can be reduced and the amount of radiation from the heat collecting pipe 22 can be reduced.

When the heat collector 1 in the fourteenth embodiment includes a plurality of heat collecting modules as in FIGS. 4, 6 and 7, control of rotation of the reflecting mirror 21 that has been described in the fourteenth embodiment can be performed for each heat collecting module.

### (Fifteenth Embodiment)

FIG. 10 is a sectional view for explaining the operation of the heat collector 1 of a fifth embodiment.

When circulation of the heat medium 11 stops in all or part of the heat collector 1, the heat collector 1 in the present embodiment turns the convex surface of the reflecting mirror 21 upward (to the +Z direction) and moves the reflecting mirror 21 to a position above the heat collecting pipe 22. When circulation of the heat medium 11 in the heat collector 1 restarts, the heat collector 1 in the present embodiment rotates the reflecting mirror 21 to restart concentration of sunrays to the heat collecting pipe 22.

When the wind W is sufficiently small, the amount of forced-convection heat transfer from the heat collecting pipe 22 to the air is small. When the amount of natural-convection heat transfer from the heat collecting pipe 22 to the air is reduced, the amount of radiation from the heat collecting pipe 22 is reduced. Accordingly, in the present embodiment, the convex surface of the reflecting mirror 21 is turned upward to suppress the air flow directly above the heat collecting pipe 22. Therefore, according to the present embodiment, the amount of natural-convection heat transfer from the heat collecting pipe 22 to the air can be reduced and the amount of radiation from the heat collecting pipe 22 can be reduced.

When the heat collector 1 in the fifteenth embodiment includes a plurality of heat collecting modules as in FIGS. 4, 6 and 7, control of rotation of the reflecting mirror 21 that has been described in the fifteenth embodiment can be performed for each heat collecting module.

While certain embodiments have been described, these embodiments have been presented by way of example only, and are not intended to limit the scope of the inventions as defined by the claims. Indeed, the novel systems described herein may be embodied in a variety of other forms; furthermore, various omissions, substitutions and changes in the form of the systems described herein may be made without departing from the scope of the inventions as defined by the claims.

## Claims

1. A solar heat collecting system comprising:
a heat collector (1) including one or more heat collecting modules (1a, 1b, 1c) configured to heat a heat medium (11) by a sunray;
a heating device (4, 7) configured to heat a heat utilizing fluid (12) by heat of the heat medium; and
a heat medium flow path (3) configured to circulate the heat medium between the heat collector and the heating device;
**characterized in that** the system further comprising a controller (32) configured to control circulation of the heat medium in the heat collector in accordance with an amount of direct solar radiation of the sunray, or in accordance with a temperature difference between a first temperature of the heat medium at a first position located in a vicinity of a heat medium entrance of one of the heat collecting modules and a second temperature of the heat medium at a second position located in a vicinity of a heat medium exit of one of the heat collecting module located downstream of the first position with respect to the heat medium,
wherein
the controller (32) is configured to stop the circulation of the heat medium in all or part of the heat collector, when the amount of direct solar radiation is smaller than a predetermined value, when a time period in which the amount of direct solar radiation is smaller than the predetermined value lasts longer than predetermined time, when the temperature difference is smaller than a predetermined value, or when a time period in which the temperature difference is smaller than the predetermined value lasts longer than predetermined time, and
the controller (32) is configured to restart the circulation of the heat medium in the heat collector during the stop of the circulation of the heat medium in all or part of the heat collector, when the amount of direct solar radiation is larger than a predetermined value, when a time period in which the amount of direct solar radiation is larger than the predetermined value lasts longer than predetermined time, when the temperature difference is larger than a predetermined value, or when a time period in which the temperature difference is larger than the predetermined value lasts longer than predetermined time.

2. The system of Claim 1, wherein
the heat collector includes, as the one or more heat collecting modules, a plurality of heat collecting modules (1a, 1b, 1c), and
the controller is configured to control the circulation of the heat medium in at least one of the heat collecting modules in accordance with the amount of direct solar radiation or the temperature difference.

3. The system of Claim 2, wherein
the heat collector includes, as the one or more heat collecting modules, heat collecting modules (1a, 1b) arranged in parallel with respect to the heat medium, and
the controller is configured to stop the circulation of the heat medium in the at least one of the heat collecting modules, when the amount of direct solar radiation is smaller than a predetermined value, when a time period in which the amount of direct solar radiation is smaller than the predetermined value lasts longer than predetermined time, when the temperature difference is smaller than a predetermined value, or when a time period in which the temperature difference is smaller than the predetermined value lasts longer than predetermined time.

4. The system of Claim 2, wherein
the heat collector includes, as the one or more heat collecting modules, heat collecting modules (1a, 1b) arranged in parallel with respect to the heat medium, and
the controller is configured to restart the circulation of the heat medium in the at least one of the heat collecting modules during stop of the circulation of the heat medium in the at least one of the heat collecting modules, when the amount of direct solar radiation is larger than a predetermined value, when a time period in which the amount of direct solar radiation is larger than the predetermined value lasts longer than predetermined time, when the temperature difference is larger than a predetermined value, or when a time period in which the temperature difference is larger than the predetermined value lasts longer than predetermined time.

5. The system of Claim 2, wherein
the heat collector includes, as the one or more heat collecting modules, heat collecting modules (1a, 1b, 1c) arranged in serial with respect to the heat medium, and
the controller is configured to use a bypass flow path in which the heat medium flows to bypass the at least one of the heat collecting modules, when the amount of direct solar radiation is smaller than a predetermined value, when a time period in which the amount of direct solar radiation is smaller than the predetermined value lasts longer than predetermined time, when the temperature difference is smaller than a predetermined value, or when a time period in which the temperature difference is smaller than the predetermined value lasts longer than predetermined time.

6. The system of Claim 2, wherein
the heat collector includes, as the one or more heat collecting modules, heat collecting modules (1a, 1b, 1c) arranged in serial with respect to the heat medium, and
the controller is configured to release, during use of a bypass flow path in which the heat medium flows to bypass the at least one of the heat collecting modules, the use of the bypass flow path, when the amount of direct solar radiation is larger than a predetermined value, when a time period in which the amount of direct solar radiation is larger than the predetermined value lasts longer than predetermined time, when the temperature difference is larger than a predetermined value, or when a time period in which the temperature difference is larger than the predetermined value lasts longer than predetermined time.

7. The system of Claim 1, wherein
the heat collector includes first and second portions (1a, 1b, 1c) that circulate the heat medium, and
when the circulation of the heat medium in the first portion is to be kept and the circulation of the heat medium in the second portion is to be stopped, the controller is configured to reduce a flow rate of the heat medium in the heat collector after the stop of the circulation to be lower than a flow rate of the heat medium in the heat collector before the stop of the circulation.

8. The system of Claim 1, wherein the heat collector is configured to collect heat by concentrating the sunray during stop of the circulation of the heat medium.

9. The system of Claim 1, wherein
the heat collector is configured to collect heat by concentrating the sunray,
during stop of the circulation of the heat medium, the heat collector does not concentrate the sunray to a portion of the heat collector holding the stopped heat medium, and
after restart of the circulation of the heat medium, the heat collector restarts the concentration of the sunray.

10. The system of Claim 1, wherein
the heat collector includes a light concentrating panel (21) configured to track an altitude of the sun, and
during stop of the circulation of the heat medium, the heat collector is configured to move the light concentrating panel provided in a portion of the heat collector holding the stopped heat medium, to a position at an upstream side of wind from a portion at which heat is collected by concentration of light, and
after restart of the circulation of the heat medium, the heat collector is configured to move the light concentrating panel to a light concentrating position.

11. The system of Claim 1, wherein
the heat collector includes a light concentrating panel (21) configured to track an altitude of the sun, and
during stop of the circulation of the heat medium, the heat collector is configured to move the light concentrating panel provided in a portion of the heat collector holding the stopped heat medium, to a position above a portion at which heat is collected by concentration of light, and
after restart of the circulation of the heat medium, the heat collector is configured to move the light concentrating panel to a light concentrating position.

## Patentansprüche

1. Solarwärmesammelsystem, aufweisend:
einen Wärmekollektor (1) umfassend ein oder mehrere Wärmesammelmodule (1a, 1b, 1c), die eingerichtet sind, ein Wärmemedium (11) durch Sonnenstrahlen zu erwärmen;
eine Heizvorrichtung (4, 7), die eingerichtet ist, ein Wärmenutzungsfluid (12) durch Wärme des Wärmemediums zu erwärmen; und
einen Wärmemediumströmungsweg (3), der eingerichtet ist, das Wärmemedium zwischen dem Wärmekollektor und der Heizvorrichtung zu zirkulieren;
**dadurch gekennzeichnet, dass** das System ferner eine Steuerung (32) aufweist, die eingerichtet ist, die Zirkulation des Wärmemediums in dem Wärmekollektor entsprechend einer Menge direkter Sonnenstrahlung der Sonnenstrahlen oder entsprechend einer Temperaturdifferenz zwischen einer ersten Temperatur des Wärmemediums an einer ersten Position, die sich in einer Nähe eines Wärmemediumeingangs eines der Wärmesammelmodule befindet, und einer zweiten Temperatur des Wärmemediums an einer zweiten Position, die sich in einer Nähe eines Wärmemediumausgangs eines der Wärmesammelmodule befindet, das sich in Bezug auf das Wärmemedium stromabwärts von der ersten Position befindet, zu steuern,
wobei
die Steuerung (32) eingerichtet ist, die Zirkulation des Wärmemediums in dem gesamten oder einem Teil des Wärmekollektors zu stoppen, wenn die Menge direkter Sonnenstrahlung kleiner als ein vorbestimmter Wert ist, wenn eine Zeitperiode, in der die Menge direkter Sonnenstrahlung kleiner als der vorbestimmte Wert ist, länger als eine vorbestimmte Zeit dauert, wenn die Temperaturdifferenz kleiner als ein vorbestimmter Wert ist, oder wenn eine Zeitperiode, in der die Temperaturdifferenz kleiner als der vorbestimmte Wert ist, länger als eine vorbestimmte Zeit dauert, und
die Steuerung (32) eingerichtet ist, die Zirkulation des Wärmemediums in dem Wärmekollektor während des Stoppens der Zirkulation des Wärmemediums in dem gesamten oder einem Teil des Wärmekollektors wiederaufzunehmen, wenn die Menge direkter Sonnenstrahlung größer als ein vorbestimmter Wert ist, wenn eine Zeitperiode, in der die Menge direkter Sonnenstrahlung größer als der vorbestimmte Wert ist, länger als eine vorbestimmte Zeit dauert, wenn die Temperaturdifferenz größer als ein vorbestimmter Wert ist, oder wenn eine Zeitperiode, in der die Temperaturdifferenz größer als der vorbestimmte Wert ist, länger als eine vorbestimmte Zeit dauert.

2. System nach Anspruch 1, wobei
der Wärmekollektor als das eine oder die mehreren Wärmesammelmodule eine Vielzahl Wärmesammelmodule (1a, 1b, 1c) umfasst, und
die Steuerung eingerichtet ist, die Zirkulation des Wärmemediums in wenigstens einem der Wärmesammelmodule in Abhängigkeit von der Menge direkter Sonneneinstrahlung oder der Temperaturdifferenz zu steuern.

3. System nach Anspruch 2, wobei
der Wärmekollektor als das eine oder die mehreren Wärmesammelmodule Wärmesammelmodule (1a, 1b) umfasst, die in Bezug auf das Wärmemedium parallel angeordnet sind, und
die Steuerung eingerichtet ist, die Zirkulation des Wärmemediums in dem wenigstens einen der Wärmesammelmodule zu stoppen, wenn die Menge direkter Sonneneinstrahlung kleiner als ein vorbestimmter Wert ist, wenn eine Zeitspanne, in der die Menge direkter Sonneneinstrahlung kleiner als der vorbestimmte Wert ist, länger als eine vorbestimmte Zeit dauert, wenn die Temperaturdifferenz kleiner als ein vorbestimmter Wert ist, oder wenn eine Zeitspanne, in der die Temperaturdifferenz kleiner als der vorbestimmte Wert ist, länger als eine vorbestimmte Zeit dauert.

4. System nach Anspruch 2, wobei
der Wärmekollektor als das eine oder die mehreren Wärmesammelmodule Wärmesammelmodule (1a, 1b) umfasst, die in Bezug auf das Wärmemedium parallel angeordnet sind, und
die Steuerung eingerichtet ist, die Zirkulation des Wärmemediums in dem wenigstens einen der Wärmesammelmodule während des Stoppens der Zirkulation des Wärmemediums in dem wenigstens einen der Wärmesammelmodule wiederaufzunehmen, wenn die Menge direkter Sonneneinstrahlung größer als ein vorbestimmter Wert ist, wenn eine Zeitperiode, in der die Menge direkter Sonneneinstrahlung größer als der vorbestimmte Wert ist, länger als eine vorbestimmte Zeit dauert, wenn die Temperaturdifferenz größer als ein vorbestimmter Wert ist, oder wenn eine Zeitperiode, in der die Temperaturdifferenz größer als der vorbestimmte Wert ist, länger als eine vorbestimmte Zeit dauert.

5. System nach Anspruch 2, wobei
der Wärmekollektor als das eine oder die mehreren Wärmesammelmodule Wärmesammelmodule (1a, 1b, 1c) umfasst, die in Bezug auf das Wärmemedium in Reihe angeordnet sind, und
die Steuerung eingerichtet ist, einen Bypassströmungsweg zu verwenden, in dem das Wärmemedium strömt, um das wenigstens eine der Wärmesammelmodule zu umgehen, wenn die Menge direkter Sonneneinstrahlung kleiner als ein vorbestimmter Wert ist, wenn eine Zeitperiode, in der die Menge direkter Sonneneinstrahlung kleiner als der vorbestimmte Wert ist, länger als eine vorbestimmte Zeit dauert, wenn die Temperaturdifferenz kleiner als ein vorbestimmter Wert ist, oder wenn eine Zeitperiode, in der die Temperaturdifferenz kleiner als der vorbestimmte Wert ist, länger als eine vorbestimmte Zeit dauert.

6. System nach Anspruch 2, wobei
der Wärmekollektor als das eine oder die mehreren Wärmesammelmodule Wärmesammelmodule (1a, 1b, 1c) umfasst, die in Bezug auf das Wärmemedium in Reihe angeordnet sind, und
die Steuerung eingerichtet ist, während der Verwendung eines Bypassströmungsweges, in dem das Wärmemedium strömt, um das wenigstens eine der Wärmesammelmodule zu umgehen, die Verwendung des Bypassströmungsweges freizugeben, wenn die Menge direkter Sonneneinstrahlung größer als ein vorbestimmter Wert ist, wenn eine Zeitperiode, in der die Menge direkter Sonneneinstrahlung größer als der vorbestimmte Wert ist, länger als eine vorbestimmte Zeit dauert, wenn die Temperaturdifferenz größer als ein vorbestimmter Wert ist, oder wenn eine Zeitperiode, in der die Temperaturdifferenz größer als der vorbestimmte Wert ist, länger als eine vorbestimmte Zeit dauert.

7. System nach Anspruch 1, wobei
der Wärmekollektor erste und zweite Abschnitte (1a, 1b, 1c) aufweist, die das Wärmemedium zirkulieren, und
wenn die Zirkulation des Wärmemediums in dem ersten Abschnitt aufrechterhalten werden soll und die Zirkulation des Wärmemediums in dem zweiten Abschnitt gestoppt werden soll, die Steuerung eingerichtet ist, eine Strömungsrate des Wärmemediums in dem Wärmekollektor nach dem Stoppen der Zirkulation so zu reduzieren, dass diese niedriger ist als eine Strömungsrate des Wärmemediums in dem Wärmekollektor vor dem Stoppen der Zirkulation.

8. System nach Anspruch 1, wobei der Wärmekollektor eingerichtet ist, während des Stoppens der Zirkulation des Wärmemediums Wärme durch Konzentrieren der Sonnenstrahlen zu sammeln.

9. System nach Anspruch 1, wobei
der Wärmekollektor eingerichtet ist, Wärme durch Konzentrieren der Sonnenstrahlen zu sammeln,
während des Stoppens der Zirkulation des Wärmemediums der Wärmekollektor die Sonnenstrahlen nicht auf einen Abschnitt des Wärmekollektors konzentriert, der das gestoppte Wärmemedium enthält, und
nach Wiederaufnahme der Zirkulation des Wärmemediums der Wärmekollektor die Konzentration der Sonnenstrahlen wieder aufnimmt.

10. System nach Anspruch 1, wobei
der Wärmekollektor ein Lichtkonzentrationspaneel (21) umfasst, das eingerichtet ist, einem Sonnenstand zu folgen, und
während des Stoppens der Zirkulation des Wärmemediums der Wärmekollektor eingerichtet ist, das Lichtkonzentrationspaneel, das in einem Abschnitt des Wärmekollektors vorgesehen ist, der das gestoppte Wärmemedium enthält, zu einer Position an einer stromaufwärtigen Seite des Windes von einem Abschnitt zu bewegen, an dem Wärme durch Konzentration von Licht gesammelt wird, und
nach Wiederaufnahme der Zirkulation des Wärmemediums der Wärmekollektor eingerichtet ist, das Lichtkonzentrationspaneel in eine Lichtkonzentrationsposition zu bewegen.

11. System nach Anspruch 1, wobei
der Wärmekollektor ein Lichtkonzentrationspaneel (21) umfasst, das eingerichtet ist, einem Sonnenstand zu folgen, und
während des Stoppens der Zirkulation des Wärmemediums der Wärmekollektor eingerichtet ist, das Lichtkonzentrationspaneel, das in einem Abschnitt des Wärmekollektors vorgesehen ist, der das gestoppte Wärmemedium enthält, zu einer Position oberhalb eines Abschnitts zu bewegen, in dem Wärme durch Lichtkonzentration gesammelt wird, und
nach Wiederaufnahme der Zirkulation des Wärmemediums der Wärmekollektor eingerichtet ist, das Lichtkonzentrationspaneel in eine Lichtkonzentrationsposition zu bewegen.

## Revendications

1. Système de collecte de chaleur solaire comprenant :
un collecteur de chaleur (1) qui inclut un ou plusieurs modules de collecte de chaleur (1a, 1b, 1c) qui sont configurés pour chauffer un milieu caloporteur (11) au moyen d'un rayon solaire ;
un dispositif de chauffage (4, 7) configuré pour chauffer un fluide utilisant la chaleur (12) par la chaleur du milieu caloporteur ; et
une voie d'écoulement de milieu caloporteur (3) configurée pour faire circuler le milieu caloporteur entre le collecteur de chaleur et le dispositif de chauffage ;
**caractérisé en ce que** le système comprend en outre un contrôleur (32) configuré pour contrôler la circulation du milieu caloporteur dans le collecteur de chaleur en fonction d'une quantité de rayonnement solaire direct du rayon solaire, ou en fonction d'une différence de température entre une première température du milieu caloporteur à une première position qui est localisée dans un voisinage d'une entrée de milieu caloporteur de l'un des modules de collecte de chaleur et une seconde température du milieu caloporteur à une seconde position qui est localisée dans un voisinage d'une sortie de milieu caloporteur de l'un des modules de collecte de chaleur, laquelle seconde position est localisée en aval de la première position par rapport au milieu caloporteur ;
dans lequel
le contrôleur (32) est configuré pour arrêter la circulation du milieu caloporteur dans la totalité du collecteur de chaleur ou dans une partie de celui-ci, lorsque la quantité de rayonnement solaire direct est inférieure à une valeur prédéterminée, lorsqu'une période temporelle pendant laquelle la quantité de rayonnement solaire direct est inférieure à la valeur prédéterminée dure plus longtemps qu'un temps prédéterminé, lorsque la différence de température est inférieure à une valeur prédéterminée ou lorsqu'une période temporelle pendant laquelle la différence de température est inférieure à la valeur prédéterminée dure plus longtemps qu'un temps prédéterminé ; et
le contrôleur (32) est configuré pour redémarrer la circulation du milieu caloporteur dans le collecteur de chaleur pendant l'arrêt de la circulation du milieu caloporteur dans la totalité du collecteur de chaleur ou dans une partie de celui-ci, lorsque la quantité de rayonnement solaire direct est supérieure à une valeur prédéterminée, lorsqu'une période temporelle pendant laquelle la quantité de rayonnement solaire direct est supérieure à la valeur prédéterminée dure plus longtemps qu'un temps prédéterminé, lorsque la différence de température est supérieure à une valeur prédéterminée, ou lorsqu'une période temporelle pendant laquelle la différence de température est supérieure à la valeur prédéterminée dure plus longtemps qu'un temps prédéterminé.

2. Système selon la revendication 1, dans lequel
le collecteur de chaleur inclut, en tant que les un ou plusieurs modules de collecte de chaleur, une pluralité de modules de collecte de chaleur (1a, 1b, 1c) ; et
le contrôleur est configuré pour contrôler la circulation du milieu caloporteur dans au moins l'un des modules de collecte de chaleur en fonction de la quantité de rayonnement solaire direct ou de la différence de température.

3. Système selon la revendication 2, dans lequel
le collecteur de chaleur inclut, en tant que les un ou plusieurs modules de collecte de chaleur, des modules de collecte de chaleur (1a, 1b) qui sont agencés en parallèle par rapport au milieu caloporteur ; et
le contrôleur est configuré pour arrêter la circulation du milieu caloporteur dans l'au moins un des modules de collecte de chaleur, lorsque la quantité de rayonnement solaire direct est inférieure à une valeur prédéterminée, lorsqu'une période temporelle pendant laquelle la quantité de rayonnement solaire direct est inférieure à la valeur prédéterminée dure plus longtemps qu'un temps prédéterminé, lorsque la différence de température est inférieure à une valeur prédéterminée, ou lorsqu'une période temporelle pendant laquelle la différence de température est inférieure à la valeur prédéterminée dure plus longtemps qu'un temps prédéterminé.

4. Système selon la revendication 2, dans lequel
le collecteur de chaleur inclut, en tant que les un ou plusieurs modules de collecte de chaleur, des modules de collecte de chaleur (1a, 1b) qui sont agencés en parallèle par rapport au milieu caloporteur ; et
le contrôleur est configuré pour redémarrer la circulation du milieu caloporteur dans l'au moins un des modules de collecte de chaleur pendant l'arrêt de la circulation du milieu caloporteur dans l'au moins un des modules de collecte de chaleur, lorsque la quantité de rayonnement solaire direct est supérieure à une valeur prédéterminée, lorsqu'une période temporelle pendant laquelle la quantité de rayonnement solaire direct est supérieure à la valeur prédéterminée dure plus longtemps qu'un temps prédéterminé, lorsque la différence de température est supérieure à une valeur prédéterminée, ou lorsqu'une période temporelle pendant laquelle la différence de température est supérieure à la valeur prédéterminée dure plus longtemps qu'un temps prédéterminé.

5. Système selon la revendication 2, dans lequel
le collecteur de chaleur inclut, en tant que les un ou plusieurs modules de collecte de chaleur, des modules de collecte de chaleur (1a, 1b, 1c) qui sont agencés en série par rapport au milieu caloporteur ; et
le contrôleur est configuré pour utiliser une voie d'écoulement de dérivation à l'intérieur de laquelle le milieu caloporteur s'écoule pour dériver l'au moins un des modules de collecte de chaleur, lorsque la quantité de rayonnement solaire direct est inférieure à une valeur prédéterminée, lorsqu'une période temporelle pendant laquelle la quantité de rayonnement solaire direct est inférieure à la valeur prédéterminée dure plus longtemps qu'un temps prédéterminé, lorsque la différence de température est inférieure à une valeur prédéterminée, ou lorsqu'une période temporelle pendant laquelle la différence de température est inférieure à la valeur prédéterminée dure plus longtemps qu'un temps prédéterminé.

6. Système selon la revendication 2, dans lequel
le collecteur de chaleur inclut, en tant que les un ou plusieurs modules de collecte de chaleur, des modules de collecte de chaleur (1a, 1b, 1c) agencés en série par rapport au milieu caloporteur ; et
le contrôleur est configuré pour libérer, pendant l'utilisation d'une voie d'écoulement de dérivation à l'intérieur de laquelle le milieu caloporteur s'écoule pour dériver l'au moins un des modules de collecte de chaleur, l'utilisation de la voie d'écoulement de dérivation, lorsque la quantité de rayonnement solaire direct est supérieure à une valeur prédéterminée, lorsqu'une période temporelle pendant laquelle la quantité de rayonnement solaire direct est supérieure à la valeur prédéterminée dure plus longtemps qu'un temps prédéterminé, lorsque la différence de température est supérieure à une valeur prédéterminée, ou lorsqu'une période temporelle pendant laquelle la différence de température est supérieure à la valeur prédéterminée dure plus longtemps qu'un temps prédéterminé.

7. Système selon la revendication 1, dans lequel
le collecteur de chaleur inclut des première et seconde parties (1a, 1b, 1c) qui font circuler le milieu caloporteur ; et
lorsque la circulation du milieu caloporteur dans la première partie doit être maintenue et que la circulation du milieu caloporteur dans la seconde partie doit être arrêtée, le contrôleur est configuré pour réduire un débit d'écoulement du milieu caloporteur dans le collecteur de chaleur après l'arrêt de la circulation de telle sorte que ce débit d'écoulement soit inférieur à un débit d'écoulement du milieu caloporteur dans le collecteur de chaleur avant l'arrêt de la circulation.

8. Système selon la revendication 1, dans lequel le collecteur de chaleur est configuré pour collecter la chaleur en concentrant le rayon solaire pendant l'arrêt de la circulation du milieu caloporteur.

9. Système selon la revendication 1, dans lequel
le collecteur de chaleur est configuré pour collecter la chaleur en concentrant le rayon solaire ;
pendant l'arrêt de la circulation du milieu caloporteur, le collecteur de chaleur ne concentre pas le rayon solaire sur une partie du collecteur de chaleur qui contient le milieu caloporteur arrêté ; et
après le redémarrage de la circulation du milieu caloporteur, le collecteur de chaleur redémarre la concentration du rayon solaire.

10. Système selon la revendication 1, dans lequel
le collecteur de chaleur inclut un panneau de concentration de lumière (21) configuré pour suivre une altitude du soleil ; et
pendant l'arrêt de la circulation du milieu caloporteur, le collecteur de chaleur est configuré pour déplacer le panneau de concentration de lumière, qui est prévu dans une partie du collecteur de chaleur qui contient le milieu caloporteur arrêté, jusqu'à une position à un côté amont du vent par rapport à une partie au niveau de laquelle la chaleur est collectée au moyen de la concentration de la lumière ; et
après le redémarrage de la circulation du milieu caloporteur, le collecteur de chaleur est configuré pour déplacer le panneau de concentration de lumière jusqu'à une position de concentration de lumière.

11. Système selon la revendication 1, dans lequel
le collecteur de chaleur inclut un panneau de concentration de lumière (21) configuré pour suivre une altitude du soleil ; et
pendant l'arrêt de la circulation du milieu caloporteur, le collecteur de chaleur est configuré pour déplacer le panneau de concentration de lumière, qui est prévu dans une partie du collecteur de chaleur qui contient le milieu caloporteur arrêté, jusqu'à une position au-dessus d'une partie au niveau de laquelle la chaleur est collectée au moyen de la concentration de la lumière ; et
après le redémarrage de la circulation du milieu caloporteur, le collecteur de chaleur est configuré pour déplacer le panneau de concentration de lumière jusqu'à une position de concentration de lumière.
